# EUROPEAN PATENT APPLICATION

(11) **EP 4 810 566 A1**
(43) Date of publication of application: **23.09.2026**
(21) Application number: 24903607.0
(22) Date of filing: 05.12.2024
(51) Int. Cl.: C08L 27/12, C08L 71/02, C08L 101/02

(54) **AQUEOUS FLUOROPOLYMER DISPERSION**

(30) Priority: 12.12.2023 JP 2023209602
(71) Applicant: DAIKIN INDUSTRIES, LTD., Osaka-shi, Osaka 530-0001 (JP)
(72) Inventor: YOSHIOKA, Takuya, Osaka-Shi, Osaka 530-0001 (JP); YAMAMOTO, Emi, Osaka-Shi, Osaka 530-0001 (JP); FUJIMOTO, Yohei, Osaka-Shi, Osaka 530-0001 (JP); KATO, Taketo, Osaka-Shi, Osaka 530-0001 (JP)
(74) Representative: Hoffmann Eitle
(86) International application number: PCT/JP2024/043076
(87) International publication number: WO 2025/126950

(57) **Abstract**

Provided is a fluoropolymer aqueous dispersion comprising: a polymer (I) having a hydrophilic group; a fluoropolymer; a nonionic surfactant (a) having an HLB of more than 8; and an aqueous medium, wherein the dispersion is substantially free from a fluorine-containing surfactant, a content of the fluoropolymer is 40% by mass or more and 70% by mass or less based on the fluoropolymer aqueous dispersion, a content of the nonionic surfactant (a) is 4.0% by mass or more and 12% by mass or less based on the fluoropolymer, and a height of foam of the fluoropolymer aqueous dispersion generated by a foamability test is 140 mm or less.

## Description

### TECHNICAL FIELD

The present disclosure relates to a fluoropolymer aqueous dispersion.

### BACKGROUND ART

Patent Document 1 discloses a composition comprising polytetrafluoroethylene, a polymer (I) containing a polymerization unit (I) derived from a monomer represented by the general formula (I), a nonionic surfactant, and an aqueous medium, wherein the content of the polytetrafluoroethylene in the composition is 10% by mass or more based on the composition, and the content of the nonionic surfactant in the composition is 1.0% by mass or more based on the polytetrafluoroethylene:

CX¹X³=CX²R(-CZ¹Z²-A⁰)ₘ (I)

wherein X¹ and X³ are each independently F, Cl, H, or CF₃; X² is H, F, an alkyl group, or a fluorine-containing alkyl group; A⁰ is an anionic group; R is a linking group; Z¹ and Z² are each independently H, F, an alkyl group, or a fluorine-containing alkyl group; and m is an integer of 1 or more.

### RELATED ART

### PATENT DOCUMENTS

Patent Document 1: International Publication No. WO 2021/045227

### SUMMARY OF THE INVENTION

### PROBLEM TO BE SOLVED BY THE INVENTION

An object of the present disclosure is to provide a fluoropolymer aqueous dispersion that is less likely to foam.

### MEANS FOR SOLVING THE PROBLEM

The present disclosure provides a fluoropolymer aqueous dispersion comprising: a polymer (I) having a hydrophilic group; a fluoropolymer; a nonionic surfactant (a) having an HLB of more than 8; and an aqueous medium, wherein the dispersion is substantially free from a fluorine-containing surfactant, a content of the fluoropolymer is 40% by mass or more and 70% by mass or less based on the fluoropolymer aqueous dispersion, a content of the nonionic surfactant (a) is 4.0% by mass or more and 12% by mass or less based on the fluoropolymer, and a height of foam of the fluoropolymer aqueous dispersion generated by a foamability test is 140 mm or less.

### EFFECT OF INVENTION

The present disclosure can provide a fluoropolymer aqueous dispersion that is less likely to foam.

### DESCRIPTION OF EMBODIMENTS

Before specifically describing the present disclosure, some terms used herein are defined or explained.

The fluororesin as used herein means a partially crystalline fluoropolymer which is a fluoroplastic. The fluororesin has a melting point and has thermoplasticity, and may be either melt-fabricable or non melt-processible.

The melt-fabricable as used herein means that a polymer has an ability to be processed in a molten state using a conventional processing device such as an extruder or an injection molding machine. Accordingly, a melt-processable fluororesin usually has a melt flow rate of 0.01 to 500 g/10 min as measured by the measurement method described below.

The fluoroelastomer as used herein is an amorphous fluoropolymer. Being "amorphous" means that the size of a melting peak (ΔH) appearing in differential scanning calorimetry (DSC) (temperature-increasing rate 10°C/min) or differential thermal analysis (DTA) (temperature-increasing rate 10°C/min) of the fluoropolymer is 4.5 J/g or less. The fluoroelastomer exhibits elastomeric characteristics when crosslinked. Elastomeric characteristics mean such characteristics that the polymer can be stretched, and retain its original length when the force required to stretch the polymer is no longer applied.

The perfluoroelastomer as used herein means a fluoropolymer having a perfluoromonomer unit content of 90 mol% or more, preferably 91 mol% or more based on all polymerization units, having a glass transition temperature of 20°C or lower, having a melting peak (ΔH) of 4.5 J/g or lower, and having a fluorine atom concentration in the fluoropolymer of 71% by mass or more, preferably 71.5% by mass or more. The fluorine atom concentration in the fluoropolymer as used herein is the concentration (% by mass) of the fluorine atoms contained in the fluoropolymer calculated based on the type and content of each monomer constituting the fluoropolymer.

The perfluoromonomer as used herein means a monomer free from a carbon-hydrogen bond in the molecule. The perfluoromonomer may be a monomer containing carbon atoms and fluorine atoms in which some of the fluorine atoms bonded to any of the carbon atoms are replaced by chlorine atoms, and may be a monomer containing a nitrogen atom, an oxygen atom, a sulfur atom, a phosphorus atom, a boron atom, or a silicon atom in addition to the carbon atoms. The perfluoromonomer is preferably a monomer in which all the hydrogen atoms are replaced with fluorine atoms. The perfluoromonomer does not encompass a monomer that provides a crosslinking site.

The monomer that provides a crosslinking site is a monomer (cure-site monomer) having a crosslinkable group that provides the fluoropolymer with a crosslinking site for forming a crosslink with the curing agent.

Polytetrafluoroethylene (PTFE) as used herein is preferably a fluoropolymer having a tetrafluoroethylene unit content of 99 mol% or more based on all polymerization units.

The fluororesin excluding polytetrafluoroethylene and the fluoroelastomer as used herein are each preferably a fluoropolymer having a tetrafluoroethylene unit content of less than 99 mol% based on all polymerization units.

Herein, the content of each monomer constituting the fluoropolymer can be calculated by any suitable combination of NMR, FT-IR, elemental analysis, and X-ray fluorescence analysis according to the type of monomer.

The term "organic group" as used herein means a group containing one or more carbon atoms or a group formed by removing one hydrogen atom from an organic compound. The organic group is preferably an alkyl group optionally having one or more substituents.

A range specified by the endpoints as used herein includes all numerical values within the range (for example, the range of 1 to 10 includes 1.4, 1.9, 2.33, 5.75, 9.98, and the like).

The phrase "at least one" as used herein includes all numerical values equal to or greater than 1 (such as at least 2, at least 4, at least 6, at least 8, at least 10, at least 25, at least 50, and at least 100).

Hereinafter, specific embodiments of the present disclosure will now be described in detail, but the present disclosure is not limited to the following embodiments.

A fluoropolymer aqueous dispersion containing a fluoropolymer at a high concentration can be used in various applications while maintaining the form of an aqueous dispersion. When a fluoropolymer aqueous dispersion contains a fluoropolymer at a high concentration, dispersion stability of the fluoropolymer in the fluoropolymer aqueous dispersion tends to be impaired. Therefore, as disclosed in Patent Document 1, a technique for enhancing dispersion stability of the fluoropolymer by using, in the fluoropolymer aqueous dispersion, a polymer (I) containing a polymerization unit (I) and a nonionic surfactant is known.

However, it has now been found that, when such a fluoropolymer aqueous dispersion is stirred, foam may be generated, and when applied to various applications, there is a problem in that the quality of a final product is reduced. A means for suppressing foaming of a fluoropolymer aqueous dispersion containing a fluoropolymer at a high concentration and containing a polymer having a hydrophilic group and a nonionic surfactant has not yet been studied.

A first fluoropolymer aqueous dispersion of the present disclosure is a fluoropolymer aqueous dispersion comprising: a polymer (I) having a hydrophilic group; a fluoropolymer; a nonionic surfactant (a) having an HLB of more than 8; and an aqueous medium, wherein the dispersion is substantially free from a fluorine-containing surfactant, a content of the fluoropolymer is 40% by mass or more and 70% by mass or less based on the fluoropolymer aqueous dispersion, a content of the nonionic surfactant (a) is 4.0% by mass or more and 12% by mass or less based on the fluoropolymer, and a height of foam of the fluoropolymer aqueous dispersion generated by a foamability test is 140 mm or less.

Since the first fluoropolymer aqueous dispersion of the present disclosure has the above-described configuration, despite containing a fluoropolymer at a high concentration, dispersion stability of the fluoropolymer is high, and moreover, foaming is less likely to occur. Thus, even when the fluoropolymer aqueous dispersion is applied to various applications, defects caused by foaming of the aqueous dispersion are less likely to occur, and a high-quality product can be produced.

In addition, a second fluoropolymer aqueous dispersion of the present disclosure is a fluoropolymer aqueous dispersion comprising: a polymer (I) having a hydrophilic group; a fluoropolymer; a nonionic surfactant (a) having an HLB of more than 8; a nonionic surfactant (b) having an HLB of 8 or less; and an aqueous medium, wherein the dispersion is substantially free from a fluorine-containing surfactant, a content of the fluoropolymer is 40% by mass or more and 70% by mass or less based on the fluoropolymer aqueous dispersion, and a content of the nonionic surfactant (a) is 4.0% by mass or more and 12% by mass or less based on the fluoropolymer.

Since the second fluoropolymer aqueous dispersion of the present disclosure has the above-described configuration, despite containing a fluoropolymer at a high concentration, dispersion stability of the fluoropolymer is high, and moreover, foaming is less likely to occur. Thus, even when the fluoropolymer aqueous dispersion is applied to various applications, defects caused by foaming of the aqueous dispersion are less likely to occur, and a high-quality product can be produced.

Hereinafter, the first and second fluoropolymer aqueous dispersions of the present disclosure (hereinafter, both of them may be collectively referred to simply as a fluoropolymer aqueous dispersion) will be described in detail.

### (Fluoropolymer aqueous dispersion)

In one embodiment, the fluoropolymer aqueous dispersion can be characterized in that the height of foam generated by a foamability test is 140 mm or less.

The height of foam is an indicator of the magnitude of foamability of the fluoropolymer aqueous dispersion. In a case where the height of foam generated by a foamability test is 140 mm or less, foam is less likely to be generated or generated foam is likely to disappear easily when the fluoropolymer aqueous dispersion is used in various applications, and therefore, defects caused by foaming of the aqueous dispersion are less likely to occur, and a high-quality product can be produced.

The height of foam is preferably 120 mm or less, more preferably 100 mm or less, and even more preferably 70 mm or less.

The height of foam of the aqueous dispersion can be specified by adjusting the content of the fluoropolymer in the aqueous dispersion to 55% by mass, performing a foamability test by the Ross-Miles method in accordance with JIS K 3362, generating foam by dropping the fluoropolymer aqueous dispersion having the content of the fluoropolymer adjusted to 55% by mass, and measuring the height of foam immediately after the dropping.

In one embodiment, the content of the fluoropolymer in the fluoropolymer aqueous dispersion is 40% by mass or more and 70% by mass or less, is preferably 45% by mass or more and more preferably 55% by mass or more, and is preferably 67% by mass or less and more preferably 65% by mass or less based on the fluoropolymer aqueous dispersion.

The content (P% by mass) of the fluoropolymer in the fluoropolymer aqueous dispersion is a value calculated according to the expression: P = [Z/X] × 100 (% by mass) from the heating residue (Y g) obtained by heating about 1 g (X g) of a sample at 110°C for 30 minutes and the heating residue (Z g) obtained by heating the obtained heating residue (Y g) at 300°C for 30 minutes.

In one embodiment, the content of the nonionic surfactant (a) in the fluoropolymer aqueous dispersion is 4.0% by mass or more and 12% by mass or less, is preferably 5.0% by mass or more and more preferably 5.5% by mass or more, and is preferably 10% by mass or less and more preferably 8.0% by mass or less based on the fluoropolymer.

The content (N% by mass) of the nonionic surfactant (a) is a value calculated according to the expression: N = [(Y - Z)/X] × 100 (% by mass) from the heating residue (Y g) obtained by heating about 1 g (X g) of a sample at 110°C for 30 minutes and the heating residue (Z g) obtained by heating the obtained heating residue (Y g) at 300°C for 30 minutes.

In one embodiment, the content of the polymer (I) in the fluoropolymer aqueous dispersion is preferably 0.1 mass ppm or more, more preferably 0.5 mass ppm or more, and even more preferably 10.0 mass ppm or more, and is preferably 2,000 mass ppm or less, more preferably 1,500 mass ppm or less, even more preferably less than 1,000 mass ppm, yet more preferably 500 mass ppm or less, and particularly preferably 250 mass ppm or less based on the aqueous dispersion.

In one embodiment, the content of the polymer (I) in the fluoropolymer aqueous dispersion is preferably 0.001% by mass or more, more preferably 0.005% by mass or more, even more preferably 0.01% by mass or more, particularly preferably 0.05% by mass or more, and most preferably 0.10% by mass or more, and is preferably 10% by mass or less, more preferably 5.0% by mass or less, even more preferably 2.0% by mass or less, particularly preferably 1.0% by mass or less, and most preferably 0.50% by mass or less based on the fluoropolymer.

The content of the polymer (I) in the polymerization dispersion is determined by solid-state NMR measurement or melt NMR measurement. When the polymer (I) contains a carbonyl group, the content can also be determined by a Fourier transform infrared spectroscopic analyzer.

Also, International Publication No. WO 2014/099453, International Publication No. WO 2010/075497, International Publication No. WO 2010/075496, International Publication No. WO 2011/008381, International Publication No. WO 2009/055521, International Publication No. WO 1987/007619, Japanese Patent Laid-Open No. 61-293476, International Publication No. WO 2010/075494, International Publication No. WO 2010/075359, International Publication No. WO 2012/082454, International Publication No. WO 2006/119224, International Publication No. WO 2013/085864, International Publication No. WO 2012/082707, International Publication No. WO 2012/082703, International Publication No. WO 2012/082451, International Publication No. WO 2006/135825, International Publication No. WO 2004/067588, International Publication No. WO 2009/068528, Japanese Patent Laid-Open No. 2004-075978, Japanese Patent Laid-Open No. 2001-226436, International Publication No. WO 1992/017635, International Publication No. WO 2014/069165, Japanese Patent Laid-Open No. 11-181009, and the like disclose measurement methods for their respective polymers. The method for measuring the content of the polymer (I) may be any of the polymer measurement methods respectively described in these documents.

In one embodiment, the fluoropolymer aqueous dispersion is substantially free from a fluorine-containing surfactant.

Herein, the phrase "is substantially free from a fluorine-containing surfactant" means that the content of the fluorine-containing surfactant in the aqueous dispersion is 10 mass ppm or less, preferably 1 mass ppm or less, more preferably 100 mass ppb or less, even more preferably 10 mass ppb or less, yet more preferably 1 mass ppb or less, and particularly preferably less than the detection limit of measurement by liquid chromatography-mass spectrometry (LC/MS).

The content of the fluorine-containing surfactant can be measured by, for example, adding methanol to the aqueous dispersion to carry out extraction and subjecting the resulting extracted liquid to an LC/MS analysis.

To further increase extraction efficiency, treatment by Soxhlet extraction, ultrasonic treatment, or the like may be performed.

From the resulting LC/MS spectrum, molecular weight information is extracted, and a match with the structural formula of a candidate fluorine-containing surfactant is checked.

Thereafter, aqueous solutions having five or more different content levels of the confirmed fluorine-containing surfactant are prepared, and LC/MS analysis of the aqueous solution of each content is performed, and the relationship between the content and the area for the content is plotted, and a calibration curve is drawn.

Then, using the calibration curve, the area of the LC/MS chromatogram of the fluorine-containing surfactant in the extract can be converted into the content of the fluorine-containing surfactant.

### (Nonionic surfactant (b))

In one embodiment, the fluoropolymer aqueous dispersion contains a nonionic surfactant (b) having an HLB of 8 or less. The nonionic surfactant (b) having an HLB of 8 or less reduces foamability of the fluoropolymer aqueous dispersion and suppresses foaming when the fluoropolymer aqueous dispersion is stirred. When a nonionic surfactant having a high HLB is used, it is difficult to suppress foaming when the fluoropolymer aqueous dispersion is stirred.

The HLB value of the nonionic surfactant (b) is 8 or less and preferably 1 or more.

In the present disclosure, the HLB of the nonionic surfactant (b) is a value defined by the following calculation formula according to the Griffin method: 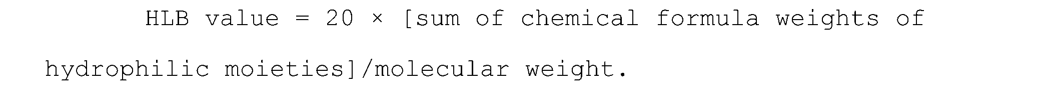 HLB value = 20 × [sum of chemical formula weights of hydrophilic moieties]/molecular weight.

The nonionic surfactant (b) is preferably at least one selected from the group consisting of an acetylenediol surfactant and an alkanediol surfactant.

The acetylenediol surfactant is a surfactant having a carbon-carbon triple bond in the molecule. Examples of the acetylenediol surfactant include an acetylenediol surfactant (having an acetylene bond and two hydroxy groups simultaneously in the same molecule), and a surfactant obtained by addition of an alkylene oxide unit to acetylenediol.

As the acetylenediol surfactant, a compound represented by the general formula (11) and a compound represented by the general formula (12) are preferable. 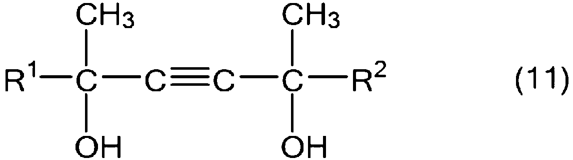 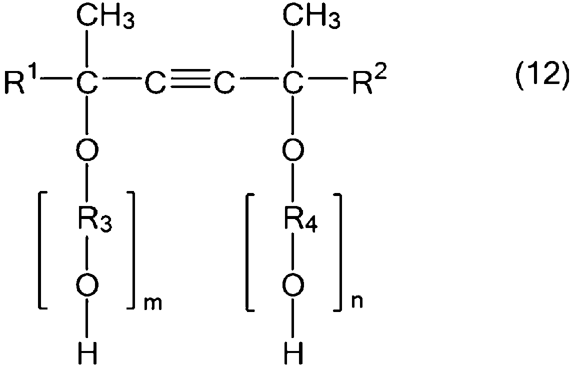 wherein R¹ and R² each independently represent an alkyl group having 3 to 9 carbon atoms, R³ and R⁴ each independently represent an alkylene group having 1 to 4 carbon atoms, m and n are integers, and the total of m and n represents 2 to 50.

As the acetylenediol surfactant, commercially available products may be used. Examples of commercially available products of the acetylenediol surfactant include Dynol(R) 607, and Surfynol(R) 104E, 104H, and 420 (all manufactured by Nissin Chemical Co., Ltd.).

Examples of the alkanediol surfactant include a surfactant having one alkylene group and two hydroxy groups in the same molecule.

Examples of the alkanediol surfactant include a compound represented by the general formula (13) and a compound represented by the general formula (14).

HO-R⁵-OH (13)

wherein R⁵ is a linear or branched alkylene group having 1 to 200 carbon atoms.

HO-R⁶-OH (14)

wherein R⁶ is a linear or branched polyoxyalkylene group having 1 to 200 carbon atoms.

As the alkanediol surfactant, commercially available products may be used. Examples of commercially available products of the alkanediol surfactant include Surfynol(R) AD01 (all manufactured by Nisshin Chemical Co., Ltd.).

In one embodiment, the surface tension of a 0.1% aqueous solution of the nonionic surfactant (b) is 40 mN/m or less.

In the present disclosure, the surface tension of the nonionic surfactant (b) can be measured by the Wilhelmy method at 25°C.

In one embodiment, the content of the nonionic surfactant (b) is 0.2% by mass or more and 10% by mass or less, is preferably 0.3% by mass or more and more preferably 0.5% by mass or more, and is preferably 8.0% by mass or less and more preferably 5.0% by mass or less based on the fluoropolymer aqueous dispersion.

The content of the nonionic surfactant (b) can be calculated from the amount of the nonionic surfactant (b) used for preparation of the aqueous dispersion and the like.

### (Nonionic surfactant (a))

In one embodiment, the fluoropolymer aqueous dispersion contains a nonionic surfactant (a) having an HLB of more than 8. By using the nonionic surfactant (a), dispersion stability of the fluoropolymer aqueous dispersion can be improved. In addition, when the fluoropolymer aqueous dispersion is concentrated by a phase separation concentration method, the nonionic surfactant (a) allows the concentration to proceed smoothly, and therefore, the fluoropolymer aqueous dispersion containing the nonionic surfactant (a) is easy to produce. It is usually difficult to obtain an aqueous dispersion having, for example, a fluoropolymer content of 40% by mass or more by concentrating the fluoropolymer aqueous dispersion by a phase separation concentration method using the nonionic surfactant (b) having an HLB of 8 or less in place of the nonionic surfactant (a). Accordingly, the fluoropolymer aqueous dispersion containing the nonionic surfactant (a) and the nonionic surfactant (b), despite containing the fluoropolymer at a high concentration, is easy to produce, has high dispersion stability of the fluoropolymer, and moreover, is less likely to foam.

The nonionic surfactant (a) usually does not contain a charged group and has a hydrophobic moiety that is a long chain hydrocarbon. The hydrophilic moiety of the nonionic surfactant (a) contains a water-soluble functional group such as a chain of ethylene ether derived from polymerization with ethylene oxide.

The HLB value of the nonionic surfactant (a) is more than 8, is preferably 10 or more, and is preferably 18 or less.

In the present disclosure, the HLB of the nonionic surfactant (a) is a value defined by the following calculation formula according to the Griffin method: 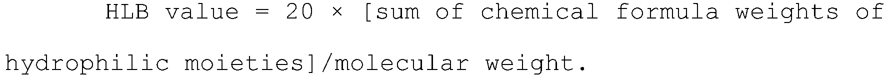 HLB value = 20 × [sum of chemical formula weights of hydrophilic moieties]/molecular weight.

The nonionic surfactant (a) is preferably a nonionic surfactant represented by the general formula (i):

R⁶-O-A¹-H (i)

wherein R⁶ is a linear or branched primary or secondary alkyl group having 8 to 18 carbon atoms, and A¹ is a polyoxyalkylene chain.

In the general formula (i), the number of carbon atoms in R⁶ is preferably 10 to 16, and more preferably 12 to 16. When the number of carbon atoms of R⁶ is 18 or less, excellent precipitation stability of the aqueous dispersion is likely obtained. On the other hand, when the number of carbon atoms of R⁶ exceeds 18, handleability is impaired because of a high flow temperature. When the number of carbon atoms of R⁶ is 8 or less, the surface tension of the aqueous dispersion is increased and, thus, permeability and wettability are likely impaired.

The polyoxyalkylene chain of A¹ may be composed of oxyethylene and oxypropylene. The polyoxyalkylene chain is a polyoxyalkylene chain in which the average number of repeating oxyethylene groups is 5 to 20 and the average number of repeating oxypropylene groups is 0 to 2, and is a hydrophilic group. The number of oxyethylene units may have either a broad or narrow monomodal distribution as typically provided, or a broader or bimodal distribution which may be obtained by blending. When the average number of repeating oxypropylene groups is more than 0, the oxyethylene groups and oxypropylene groups in the polyoxyalkylene chain may be arranged in blocks or in a random manner. In terms of the viscosity and precipitation stability of the aqueous dispersion, a polyoxyalkylene chain in which the average number of repeating oxyethylene groups is 7 to 12 and the average number of repeating oxypropylene groups is 0 to 2 is preferable. In particular, A¹ having 0.5 to 1.5 oxypropylene groups on average favorably results in reduced foamability, and is thus preferable.

More preferably, R⁶ is (R')(R")HC-, wherein R' and R" are the same or different linear, branched, or cyclic alkyl groups, and the total number of carbon atoms is at least 5, and preferably 7 to 17. Preferably, at least one of R' and R" is a branched or cyclic hydrocarbon group.

Specific examples of the polyoxyethylene alkyl ether include C₁₃H₂₇-O-(C₂H₄O)ₙ-H, C₁₂H₂₅-O-(C₂H₄O)ₙ-H, C₁₀H₂₁CH(CH₃)CH₂-O-(C₂H₄O)ₙ-H, C₁₃H₂₇-O-(C₂H₄O)ₙ-(CH(CH₃)CH₂O)-H, C₁₆H₃₃-O-(C₂H₄O)ₙ-H, and HC(C₅H₁₁)(C₇H₁₅)-O-(C₂H₄O)ₙ-H, wherein n is an integer of 1 or greater. Examples of commercially available products of the polyoxyethylene alkyl ether include Genapol X series (manufactured by Clariant) such as Genapol X080 (trade name), NOIGEN TDS series (manufactured by DKS Co., Ltd.) such as NOIGEN TDS-80 (trade name), LEOCOL TD series (manufactured by Lion Corp.) such as LEOCOL TD-90 (trade name), LIONOL(R) TD series (manufactured by Lion Corp.), T-Det A series (manufactured by Harcros Chemicals Inc.) such as T-Det A 138 (trade name), and Tergitol(R) 15 S series (manufactured by The Dow Chemical Company).

The nonionic surfactant (a) is preferably an ethoxylate of 2,6,8-trimethyl-4-nonanol having about 4 to about 18 ethylene oxide units on average, an ethoxylate of 2,6,8-trimethyl-4-nonanol having about 6 to about 12 ethylene oxide units on average, or a mixture thereof. This type of nonionic surfactant is also commercially available, for example, as TERGITOL TMN-6, TERGITOL TMN-10, and TERGITOL TMN-100X (all trade names, manufactured by Dow Chemical Co., Ltd.).

The hydrophobic group of the nonionic surfactant (a) may be any of an alkylphenol group, a linear alkyl group, and a branched alkyl group. Examples of the nonionic surfactant (a) include nonionic surfactants represented by the general formula (ii):

R⁷-C₆H₄-O-A²-H (ii)

wherein R⁷ is a linear or branched alkyl group having 4 to 12 carbon atoms, and A² is a polyoxyalkylene chain. Specific examples of the nonionic surfactant (a) include Triton(R) X-100 (trade name, manufactured by Dow Chemical Company).

The polyoxyalkylene chain of A² may be composed of oxyethylene and oxypropylene. The polyoxyalkylene chain is a polyoxyalkylene chain in which the average number of repeating oxyethylene groups is 5 to 20 and the average number of repeating oxypropylene groups is 0 to 2, and is a hydrophilic group. The number of oxyethylene units may have either a broad or narrow monomodal distribution as typically provided, or a broader or bimodal distribution which may be obtained by blending. When the average number of repeating oxypropylene groups is more than 0, the oxyethylene groups and oxypropylene groups in the polyoxyalkylene chain may be arranged in blocks or in a random manner. In terms of the viscosity and precipitation stability of the aqueous dispersion, a polyoxyalkylene chain in which the average number of repeating oxyethylene groups is 7 to 12 and the average number of repeating oxypropylene groups is 0 to 2 is preferable. In particular, A² having 0.5 to 1.5 oxypropylene groups on average favorably results in reduced foamability, and is thus preferable.

More preferably, R⁷ is a primary or secondary alkyl group, and more preferably (R')(R")HC-, wherein R' and R" are the same or different linear, branched, or cyclic alkyl groups, and the total number of carbon atoms is at least 5, and preferably 7 to 17. Preferably, at least one of R' and R" is a branched or cyclic hydrocarbon group.

Examples of other nonionic surfactants (a) include bifunctional block copolymers supplied from BASF as Pluronic(R) R series and tridecyl alcohol alkoxylates supplied from BASF as Iconol(R) TDA series.

The nonionic surfactant (a) is preferably at least one selected from the group consisting of a nonionic surfactant represented by the general formula (i) and a nonionic surfactant represented by the general formula (ii), and more preferably a nonionic surfactant represented by the general formula (i).

The nonionic surfactant (a) is preferably free from an aromatic moiety.

### (Aqueous medium)

In one embodiment, the fluoropolymer aqueous dispersion contains an aqueous medium. The aqueous medium may be any medium containing water, and it may be a medium containing water and, for example, any of fluorine-free organic solvents such as ethers and ketones, and/or fluorine-containing organic solvents having a boiling point of 40°C or lower. As the aqueous medium, an aqueous medium containing only water or an aqueous medium containing only water and a fluorine-free organic solvent is preferable, and an aqueous medium containing only water is more preferable. That is, the aqueous medium is preferably water.

### (Polymer (I) having hydrophilic group)

In one embodiment, the fluoropolymer aqueous dispersion contains a polymer (I) having a hydrophilic group. By using the polymer (I) having a hydrophilic group, dispersion stability of the fluoropolymer aqueous dispersion can be improved.

The polymer (I) is a polymer having one or more hydrophilic groups in the molecule. As the hydrophilic group, an ionic group is preferable, and an anionic group is more preferable.

In the present disclosure, the anionic group includes a functional group that imparts an anionic group, e.g., an acid group such as -COOH and an acid base such as -COONH₄, in addition to anionic groups such as a sulfate group and a carboxylate group. The anionic group is preferably a sulfate group, a carboxylate group, a phosphate group, a phosphonate group, a sulfonate group, or -C(CF₃)₂OM, wherein M is -H, a metal atom, -NR⁷₄, optionally substituted imidazolium, optionally substituted pyridinium, or optionally substituted phosphonium, and R⁷ is H or an organic group.

The ion exchange capacity of the polymer (I) is, in the order of becoming preferred, 0.80 meq/g or more, 1.50 meq/g or more, 1.75 meq/g or more, 2.00 meq/g or more, 2.20 meq/g or more, more than 2.20 meq/g, 2.50 meq/g or more, 2.60 meq/g or more, 3.00 meq/g or more, or 3.50 meq/g or more. The ion exchange capacity is the content of ionic groups (anionic groups) in the polymer (I), and can be calculated from the composition of the polymer (I).

In the polymer (I), the ionic groups (anionic groups) are typically distributed along the polymer backbone. The polymer (I) contains the polymer backbone together with a repeating side chain bonded to this backbone, and this side chain preferably has an ionic group.

The polymer (I) preferably contains an ionic group having a pKa of less than 10, and more preferably less than 7. The ionic group of the polymer (I) is preferably selected from the group consisting of sulfonate, carboxylate, phosphonate, and phosphate.

The terms "sulfonate, carboxylate, phosphonate, and phosphate" are intended to refer to the respective salts or the respective acids that can form salts. A salt when used is preferably an alkali metal salt or an ammonium salt. The ionic group is preferably a carboxylate group or a sulfonate group.

The polymer (I) preferably has an ion exchange rate (IXR) of 53 or less. The IXR is defined as the number of carbon atoms in the polymer backbone relative to the ionic groups. A precursor group that becomes ionic by hydrolysis (such as -SO₂F) is not regarded as an ionic group for the purpose of determining the IXR.

The IXR is preferably 0.5 or more, more preferably 1 or more, even more preferably 3 or more, yet more preferably 4 or more, further preferably 5 or more, and particularly preferably 8 or more. The IXR is more preferably 43 or less, even more preferably 33 or less, and particularly preferably 23 or less.

The polymer (I) preferably has water solubility. Water solubility means the property of being readily dissolved or dispersed in an aqueous medium. When the polymer (I) has water solubility, the particle size cannot be measured, or a particle size of 10 nm or less is indicated, by, for example, dynamic light scattering (DLS).

The number average molecular weight of the polymer (I) is preferably 0.1 × 10⁴ or more, more preferably 0.2 × 10⁴ or more, even more preferably 0.3 × 10⁴ or more, yet more preferably 0.4 × 10⁴ or more, further preferably 0.5 × 10⁴ or more, particularly preferably 1.0 × 10⁴ or more, more particularly preferably 3.0 × 10⁴ or more, and most preferably 3.1 × 10⁴ or more. The number average molecular weight of the polymer (I) is preferably 75.0 × 10⁴ or less, more preferably 50.0 × 10⁴ or less, even more preferably 40.0 × 10⁴ or less, yet more preferably 30.0 × 10⁴ or less, and particularly preferably 20.0 × 10⁴ or less. The number average molecular weight and the weight average molecular weight are molecular weight values calculated by gel permeation chromatography (GPC) using monodisperse polystyrene as a standard. Also, when measurement by GPC is not possible, the number average molecular weight of the polymer (I) can be determined by the correlation between the number average molecular weight calculated from the number of terminal groups obtained by NMR, FT-IR, or the like, and the melt flow rate. The melt flow rate can be measured in accordance with JIS K 7210.

The lower limit of the weight average molecular weight of the polymer (I) is, in the order of becoming preferred, 0.2 × 10⁴ or more, 0.4 × 10⁴ or more, 0.6 × 10⁴ or more, 0.8 × 10⁴ or more, 1.0 × 10⁴ or more, 2.0 × 10⁴ or more, 5.0 × 10⁴ or more, 10.0 × 10⁴ or more, 15.0 × 10⁴ or more, 20.0 × 10⁴ or more, or 25.0 × 10⁴ or more. The upper limit of the weight average molecular weight of the polymer (I) is, in the order of becoming preferred, 150.0 × 10⁴ or less, 100.0 × 10⁴ or less, 60.0 × 10⁴ or less, 50.0 × 10⁴ or less, or 40.0 × 10⁴ or less.

The viscosity of the aqueous solution of polymer (I) is preferably 5.0 mPa.s or more, more preferably 8.0 mPa.s or more, more preferably 10.0 mPa.s or more, particularly preferably 12.0 mPa.s or more, and most preferably 14.0 mPa.s or more, and is preferably 100.0 mPa.s or less, more preferably 50.0 mPa.s or less, even more preferably 25.0 mPa.s or less, and yet more preferably 20.0 mPa.s or less.

The viscosity of the aqueous solution of the polymer (I) can be determined by regulating the content of the polymer (I) in the aqueous solution to be 33% by mass based on the aqueous solution, and measuring the viscosity of the resulting aqueous solution at 20°C using a tuning fork vibration viscometer (model number: SV-10) manufactured by A&D Company Limited.

The critical micelle concentration (CMC) of the polymer (I) is preferably 0.1% by mass or more, more preferably 0.5% by mass or more, and even more preferably 1% by mass or more, and is preferably 20% by mass or less, more preferably 10% by mass or less, and even more preferably 5% by mass or less.

The critical micelle concentration of the polymer (I) can be determined by measuring surface tension. Surface tension can be measured with, for example, a surface tensiometer CBVP-A3 manufactured by Kyowa Interface Science Co., Ltd.

The acid value of the polymer (I) is preferably 60 or more, more preferably 90 or more, even more preferably 120 or more, particularly preferably 150 or more, and most preferably 180 or more, and while the upper limit is not specified, it is preferably 300 or less.

When the polymer (I) has an anionic group such as -COOM, -SO₃M, -OSO₃M, or -C(CF₃)₂OM (M is a metal atom, NR⁷₄, optionally substituted imidazolium, optionally substituted pyridinium, or optionally substituted phosphonium, and R⁷ is H or an organic group) other than an acid-type functional group, the acid value of the polymer (I) can be determined by acid-base titration after converting the anionic group into an acid-type group.

As the polymer (I), a polymer containing a polymerization unit (I) derived from a monomer (I) represented by the general formula (I) is preferable:

CX¹X³=CX²R(-CZ¹Z²-A⁰)ₘ (I)

wherein X¹ and X³ are each independently F, Cl, H, or CF₃; X² is H, F, an alkyl group, or a fluorine-containing alkyl group; A⁰ is an anionic group; R is a linking group; Z¹ and Z² are each independently H, F, an alkyl group, or a fluorine-containing alkyl group; and m is an integer of 1 or more.

R is a linking group. The "linking group" as used herein is a (m+1)-valent linking group, and refers to a divalent group when m is 1. The linking group may be a single bond and preferably contains at least one carbon atom, and the number of carbon atoms may be 2 or more, 4 or more, 8 or more, 10 or more, or 20 or more. The upper limit is not limited, and, for example, may be 100 or less, and may be 50 or less.

The linking group may be linear or branched, cyclic or acyclic, saturated or unsaturated, substituted or unsubstituted, and optionally contains one or more heteroatoms selected from the group consisting of sulfur, oxygen, and nitrogen, and optionally contains one or more functional groups selected from the group consisting of ester, amide, sulfonamide, carbonyl, carbonate, urethane, urea, and carbamate. The linking group may be free from carbon atoms and may be a catenary heteroatom such as oxygen, sulfur, or nitrogen.

m is an integer of 1 or more, and is preferably 1 or 2 and more preferably 1. When m is an integer of 2 or more, Z¹, Z², and A⁰ may be the same or different.

Next, a suitable configuration wherein m is 1 in the general formula (I) will now be described.

R is preferably a catenary heteroatom such as oxygen, sulfur, or nitrogen, or a divalent organic group.

When R is a divalent organic group, a hydrogen atom bonded to a carbon atom may be replaced with a halogen other than fluorine, such as chlorine, and a double bond may be or may not be contained. R may be linear or branched, and may be cyclic or acyclic. R may also contain a functional group (e.g., ester, ether, ketone (a keto group), amine, halide, etc.).

R may also be a fluorine-free divalent organic group or a partially fluorinated or perfluorinated divalent organic group.

R may be, for example, a hydrocarbon group in which a fluorine atom is not bonded to a carbon atom, a hydrocarbon group in which some of the hydrogen atoms bonded to carbon atoms are replaced with fluorine atoms, or a hydrocarbon group in which all of the hydrogen atoms bonded to carbon atoms are replaced with fluorine atoms, and these groups optionally contain an oxygen atom, optionally contain a double bond, and optionally contain a functional group.

R is preferably a hydrocarbon group having 1 to 100 carbon atoms that optionally contains an ether bond or a keto group, wherein some or all of the hydrogen atoms bonded to carbon atoms in the hydrocarbon group may be replaced with fluorine.

R is preferably at least one selected from -(CH₂)ₐ-, - (CF₂)ₐ-, -(CF₂)ₐ-O-, -O-(CF₂)ₐ-, -(CF₂)ₐ-O-(CF₂)_{b}-, -O(CF₂)ₐ-O-(CF₂)_{b}-, -(CF₂)ₐ-[O-(CF₂)_{b}]_{c}-, -O(CF₂)ₐ-[O-(CF₂)_{b}]_{c}-, -[(CF₂)ₐ-O]_{b}-[(CF₂)_{c}-O]_{d}-, -O[(CF₂)ₐ-O]_{b}-, -O[(CF₂)ₐ-O]_{b}-[(CF₂)_{c}-O]_{d}-, -O-[CF₂CF(CF₃)O]ₐ-(CF₂)_{b}-, -O-(CF₂)ₐ-O-[CF(CF₃)CF₂O]_{b}-, -O-[CF₂CF(CF₃)O]ₐ-(CF₂)_{b}-O-, -O-[CF₂CF(CF₃)O]ₐ-(CF₂)_{b}-O-[CF(CF₃)CF₂O]_{c}-, -[CF₂CF(CF₃)O]ₐ-, -[CF(CF₃)CF₂O]ₐ-, -(CF₂)ₐ-O-[CF(CF₃)CF₂O]ₐ-, -(CF₂)ₐ-O-[CF(CF₃)CF₂O]ₐ-(CF₂)_{b}-, -[CF₂CF(CF₃)]ₐ-CO-(CF₂)_{b}-, and combinations thereof.

In the formulas, a, b, c, and d are independently at least 1 or more. a, b, c, and d may independently be 2 or more, 3 or more, 4 or more, 10 or more, or 20 or more. The upper limits of a, b, c, and d are, for example, 100.

R is more preferably at least one selected from -O-CF₂-, -O-CF₂CF₂-, -O-CF₂CF₂-O-, -O-CF₂CF₂CF₂-, -O-CF₂CF₂CF₂-O-, -O-CF₂CF(CF₃)-O-, -O-CF₂CF₂-O-CF(CF₃)CF₂-O-, -O-CF₂CF(CF₃)-O-CF₂CF₂-O-, and -O-CF₂CF(CF₃)-O-CF₂-.

R is preferably a divalent group represented by the general formula (r1):

-CF₂-O-(CX⁶₂)ₑ-{O-CF(CF₃)}_{f}-(O)_{g}- (r1)

(wherein X⁶ is each independently H, F, or CF₃; e is an integer of 0 to 3; f is an integer of 0 to 3; and g is 0 or 1), and more preferably a divalent group represented by the general formula (r2):

-CF₂-O-(CX⁷₂)ₑ-(O)_{g}- (r2)

(wherein X⁷ is each independently H, F, or CF₃; e is an integer of 0 to 3; and g is 0 or 1).

Specific suitable examples of R include -CF₂-O-, -CF₂-O-CF₂-, -CF₂-O-CH₂-, -CF₂-O-CH₂CF₂-, -O-CF₂-, -O-CF₂CF₂-, -O-CF₂CF₂CF₂-, -O-CF₂CF₂CF₂CF₂-, -O-CF₂CF(CF₃)-O-CF₂-, -O-CF₂CF(CF₃)-O-CF₂CF₂-, -CF₂-O-CF₂CF₂-, -CF₂-O-CF₂CH₂-, -CF₂-O-CF₂CF₂CH₂-, -CF₂-O-CF(CF₃)-, -CF₂-O-CF(CF₃)CF₂-, -CF₂-O-CF(CF₃)CF₂-O-, -CF₂-O-CF(CF₃)CF₂-O-CF₂-, and -CF₂-O-CF(CF₃)CH₂-. In particular, R is preferably a perfluoroalkylene group optionally containing an oxygen atom, and, specifically, -CF₂-O-, -CF₂-O-CF₂-, -O-CF₂-, - O-CF₂CF₂-, -O-CF₂CF(CF₃)-O-CF₂-, -O-CF₂CF(CF₃)-O-CF₂CF₂-, -CF₂-O-CF₂CF₂-, -CF₂-O-CF(CF₃)-, -CF₂-O-CF(CF₃)CF₂-, or -CF₂-O-CF(CF₃)CF₂-O- is preferable.

-R-CZ¹Z²- in the general formula (I) is preferably represented by the general formula (s1):

-CF₂-O-(CX⁶₂)ₑ-{O-CF(CF₃)}_{f}-(O)_{g}-CZ¹Z²- (s1)

(wherein X⁶ is each independently H, F, or CF₃; e is an integer of 0 to 3; f is an integer of 0 to 3; g is 0 or 1; and Z¹ and Z² are each independently H, F, an alkyl group, or a fluorine-containing alkyl group), and more preferably, in the formula (s1), Z¹ and Z² are F or CF₃, and yet more preferably one is F, and the other is CF₃.

Also, -R-CZ¹Z²- in the general formula (I) is preferably represented by the general formula (s2):

-CF₂-O-(CX⁷₂)ₑ-(O)_{g}-CZ¹Z²- (s2)

(wherein X⁷ is each independently H, F, or CF₃; e is an integer of 0 to 3; g is 0 or 1; and Z¹ and Z² are each independently H, F, an alkyl group, or a fluorine-containing alkyl group), and more preferably, in the formula (s2), Z¹ and Z² are F or CF₃, and yet more preferably one is F, and the other is CF₃.

-R-CZ¹Z²- in the general formula (I) is preferably -CF₂-O-CF₂-, -O-CF₂CF₂-, -O-CF₂CF₂CF₂-, -O-CF₂CF₂CF₂CF₂-, -O-CF₂CF(CF₃)-O-CF₂-, -O-CF₂CF(CF₃)-O-CF₂CF₂-, -O-CF₂CF(CF₃)-O-CF₂CF₂CF₂-, -CF₂-O-CF(CF₃)-, -CF₂-O-C(CF₃)₂-, -CF₂-O-CF₂-CF₂-, - CF₂-O-CF₂-CF(CF₃)-, -CF₂-O-CF₂-C(CF₃)₂-, -CF₂-O-CF₂CF₂-CF₂-, -CF₂-O-CF₂CF₂-CF(CF₃)-, -CF₂-O-CF₂CF₂-C(CF₃)₂-, -CF₂-O-CF(CF₃)-CF₂-, - CF₂-O-CF(CF₃)-CF(CF₃)-, -CF₂-O-CF(CF₃)-C(CF₃)₂-, -CF₂-O-CF(CF₃)CF₂-CF₂-, -CF₂-O-CF(CF₃)CF₂-CF(CF₃)-, -CF₂-O-CF(CF₃)CF₂-C(CF₃)₂-, -CF₂-O-CF(CF₃)CF₂-O-CF₂-, -CF₂-O-CF(CF₃)CF₂-O-CF(CF₃)-, or -CF₂-O-CF(CF₃)CF₂-O-C(CF₃)₂-, more preferably -O-CF₂CF₂-, -O-CF₂CF₂CF₂-, -O-CF₂CF₂CF₂CF₂-, -O-CF₂CF(CF₃)-O-CF₂-, -O-CF₂CF(CF₃)-O-CF₂CF₂-, -CF₂-O-CF(CF₃)-, -CF₂-O-CF₂-CF(CF₃)-, -CF₂-O-CF₂CF₂-CF(CF₃)-, -CF₂-O-CF(CF₃)-CF(CF₃)-, -CF₂-O-CF(CF₃)CF₂-CF(CF₃)-, or -CF₂-O-CF(CF₃)CF₂-O-CF(CF₃)-, and even more preferably -O-CF₂CF₂-, or -O-CF₂CF(CF₃)-O-CF₂CF₂-.

It is also preferable that the polymer (I) is highly fluorinated. Except for the anionic group (A⁰) such as a phosphate group moiety (such as CH₂OP(O)(OM)₂) or a sulfate group moiety (such as CH₂OS(O)₂OM), 80% or more, 90% or more, 95% or more, or 100% of the C-H bonds in the polymer (I) are preferably replaced with C-F bonds.

The monomer (I) and the polymer (I) also preferably have a C-F bonds and do not have a C-H bond, except for the anionic group (A⁰). In other words, in the general formula (I), preferably, X¹, X², and X³ are all F, and R is a perfluoroalkylene group having one or more carbon atoms; the perfluoroalkylene group may be either linear or branched, may be either cyclic or acyclic, and may contain at least one catenary heteroatom. The perfluoroalkylene group may have 2 to 20 carbon atoms or 4 to 18 carbon atoms.

The monomer (I) and the polymer (I) may be partially fluorinated. That is to say, the monomer (I) and the polymer (I) also preferably have at least one hydrogen atom bonded to a carbon atom and at least one fluorine atom bonded to a carbon atom, in the portion excluding the anionic group (A⁰).

The anionic group (A⁰) may be -SO₂M, -SO₃M, -OSO₃M, - COOM, -SO₂NR'CH₂COOM, -CH₂OP(O)(OM)₂, [-CH₂O]₂P(O)(OM), - CH₂CH₂OP(O)(OM)₂, [-CH₂CH₂O]₂P(O)(OM), -CH₂CH₂OSO₃M, -P(O)(OM)₂, - SO₂NR'CH₂CH₂OP(O)(OM)₂, [-SO₂NR'CH₂CH₂O]₂P(O)(OM), -CH₂OSO₃M, - SO₂NR'CH₂CH₂OSO₃M, or -C(CF₃)₂OM. In particular, it is preferably -SO₃M, -OSO₃M, -COOM, -P(O)(OM)₂, or -C(CF₃)₂OM; more preferably -COOM, -SO₃M, -OSO₃M, -P(O)(OM)₂, or -C(CF₃)₂OM; and even more preferably -SO₃M, -COOM, or -P(O)(OM)₂; particularly preferably -SO₃M or -COOM.

M is H, a metal atom, NR⁷₄, optionally substituted imidazolium, optionally substituted pyridinium, or optionally substituted phosphonium, wherein R⁷ is H or an organic group.

Examples of the metal atom include alkali metals (Group 1) and alkaline earth metals (Group 2), and Na, K, or Li is preferable.

M is preferably -H, a metal atom, or -NR⁷₄, more preferably -H, an alkali metal (Group 1), an alkaline earth metal (Group 2), or -NR⁷₄, even more preferably -H, -Na, -K, - Li, or NH₄, yet more preferably -H, -Na, -K, or NH₄, particularly preferably -H, -Na or NH₄, and most preferably -H, or -NH₄.

In the polymer (I), each polymerization unit (I) may have a different anionic group or may have the same anionic group.

The monomer (I) is preferably a monomer (1) represented by the general formula (1).

The polymer (I) is preferably a polymer (1) containing a polymerization unit (1) derived from a monomer represented by the general formula (1):

CX₂=CY(-CZ₂-O-Rf-A) (1)

wherein X is the same or different and is -H or F; Y is -H, - F, an alkyl group, or a fluorine-containing alkyl group; Z is the same or different and is -H, -F, an alkyl group, or a fluoroalkyl group; Rf is a fluorine-containing alkylene group having 1 to 40 carbon atoms or a fluorine-containing alkylene group having 2 to 100 carbon atoms and having an ether bond; and A is -COOM, -SO₃M, -OSO₃M, or -C(CF₃)₂OM, where M is -H, a metal atom, -NR⁷₄, optionally substituted imidazolium, optionally substituted pyridinium, or optionally substituted phosphonium, and R⁷ is H or an organic group, provided that at least one of X, Y, and Z contains a fluorine atom.

The polymer (1) may be a homopolymer of the monomer (1) represented by the general formula (1), or may be a copolymer with a further monomer.

The fluorine-containing alkylene group having 2 to 100 carbon atoms and having an ether bond is an alkylene group that does not include a structure in which an oxygen atom is an end and that contains an ether bond between carbon atoms.

In the general formula (1), X is -H or F. Both X may be -F, or at least one may be -H. For example, one may be -F and the other may be -H, or both may be -H.

In the general formula (1), Y is -H, -F, an alkyl group, or a fluorine-containing alkyl group. The alkyl group is an alkyl group not containing a fluorine atom, and has one or more carbon atoms. The number of carbon atoms of the alkyl group is preferably 6 or less, more preferably 4 or less, and even more preferably 3 or less. The fluorine-containing alkyl group is an alkyl group containing at least one fluorine atom, and may have one or more carbon atoms. The number of carbon atoms of the fluorine-containing alkyl group is preferably 6 or less, more preferably 4 or less, and even more preferably 3 or less. Y is preferably -H, -F, or CF₃, and more preferably - F.

In the general formula (1), Z is the same or different, and is -H, -F, an alkyl group, or a fluoroalkyl group. The alkyl group is an alkyl group not containing a fluorine atom, and has one or more carbon atoms. The number of carbon atoms of the alkyl group is preferably 6 or less, more preferably 4 or less, and even more preferably 3 or less. The fluorine-containing alkyl group is an alkyl group containing at least one fluorine atom, and may have one or more carbon atoms. The number of carbon atoms of the fluorine-containing alkyl group is preferably 6 or less, more preferably 4 or less, and even more preferably 3 or less. Z is preferably -H, -F, or CF₃, and more preferably -F.

In the general formula (1), at least one of X, Y, and Z contains a fluorine atom. For example, X may be -H, and Y and Z may be -F.

In the general formula (1), Rf is a fluorine-containing alkylene group having 1 to 40 carbon atoms or a fluorine-containing alkylene group having 2 to 100 carbon atoms and having an ether bond.

The fluorine-containing alkylene group preferably has 2 or more carbon atoms. The fluorine-containing alkylene group preferably has 30 or less carbon atoms, more preferably 20 or less carbon atoms, even more preferably 10 or less carbon atoms, particularly preferably 6 or less carbon atoms, and most preferably 3 or less carbon atoms. Examples of the fluorine-containing alkylene group include -CF₂-, -CH₂CF₂-, - CF₂CF₂-, -CF₂CH₂-, -CF₂CF₂CF₂-, -CF₂CF₂CH₂-, -CF(CF₃)-, - CF(CF₃)CF₂-, and -CF(CF₃)CH₂-. The fluorine-containing alkylene group is preferably a perfluoroalkylene group.

The fluorine-containing alkylene group having an ether bond preferably has 3 or more carbon atoms. The number of carbon atoms of the fluorine-containing alkylene group having an ether bond is preferably 60 or less, more preferably 30 or less, even more preferably 12 or less, particularly preferably 9 or less, and most preferably 6 or less. The fluorine-containing alkylene group having an ether bond is also preferably a divalent group represented by the general formula: 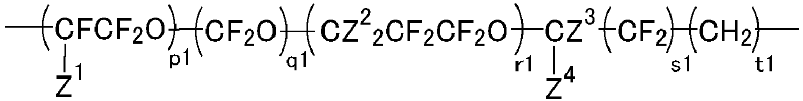 wherein Z¹ is F or CF₃; Z² and Z³ are each H or F; Z⁴ is H, F, or CF₃; p1 + q1 + r1 is an integer of 1 to 10; s1 is 0 or 1; and t1 is an integer of 0 to 5.

Specific examples of the fluorine-containing alkylene group having an ether bond include -CF₂CF(CF₃)OCF₂-, - CF(CF₃)CF₂-O-CF(CF₃)-, -(CF(CF₃)CF₂-O)ₙ-CF(CF₃)- (wherein n is an integer of 1 to 10), -CF(CF₃)CF₂-O-CF(CF₃)CH₂-, -(CF(CF₃)CF₂-O)ₙ-CF(CF₃)CH₂- (wherein n is an integer of 1 to 10), -CH₂CF₂CF₂O-CH₂CF₂CH₂-, -CF₂CF₂CF₂O-CF₂-, -CF₂CF₂CF₂O-CF₂CF₂-, -CF₂CF₂CF₂O-CF₂CF₂CF₂-, -CF₂CF₂CF₂O-CF₂CF₂CH₂-, -CF₂CF₂O-CF₂-, and -CF₂CF₂O-CF₂CH₂-. The fluorine-containing alkylene group having an ether bond is preferably a perfluoroalkylene group.

In the general formula (1), A is -COOM, -SO₃M, -OSO₃M, or -C(CF₃)₂OM, wherein M is H, a metal atom, NR⁷₄, optionally substituted imidazolium, optionally substituted pyridinium, or optionally substituted phosphonium, and R⁷ is H or an organic group.

R⁷ is preferably H or a C₁₋₁₀ organic group, more preferably H or a C₁₋₄ organic group, and even more preferably H or a C₁₋₄ alkyl group.

Examples of the metal atom include alkali metals (Group 1) and alkaline earth metals (Group 2), and Na, K, or Li is preferable.

M is preferably H, a metal atom, or NR⁷₄, more preferably H, an alkali metal (Group 1), an alkaline earth metal (Group 2), or NR⁷₄, even more preferably H, Na, K, Li, or NH₄, yet more preferably H, Na, K, or NH₄, particularly preferably H, Na or NH₄, and most preferably H or NH₄.

A is preferably -COOM or -SO₃M.

Examples of the monomer represented by the general formula (1) include the monomer represented by the general formula (1a):

CX₂=CFCF₂-O-(CF(CF₃)CF₂O)ₙ₅-CF(CF₃)-A (1a)

wherein each X is the same and represents F or H; n5 represents an integer of 1 to 10; and A is as defined above.

In the general formula (1a), n5 is preferably 0 or an integer of 1 to 5, more preferably 0, 1, or 2, and even more preferably 0 or 1, from the viewpoint of obtaining particles having a small primary particle size.

The polymer (1) may be a homopolymer of the monomer represented by the general formula (1a) or a copolymer with a further monomer.

The monomer (1) is preferably a monomer represented by the general formula (1A) below.

The polymerization unit (1) is preferably a polymerization unit (1A) derived from a monomer represented by the general formula (1A):

CH₂=CF(-CF₂-O-Rf-A) (1A)

wherein Rf and A are as described above.

The polymer (1) may be a homopolymer of the monomer represented by the general formula (1A), or may be a copolymer with a further monomer.

Specific examples of the monomer represented by the formula (1A) include a monomer represented by the following formula: 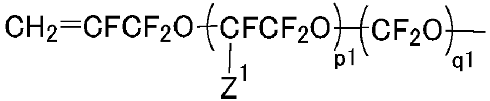 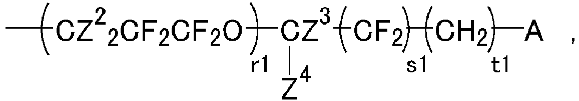 wherein Z¹ is F or CF₃; Z² and Z³ are each H or F; Z⁴ is H, F, or CF₃; p1+q1+r1 is an integer of 0 to 10; s1 is 0 or 1; t1 is an integer of 0 to 5, provided that when Z³ and Z⁴ are both H, p1+q1+r1+s1 is not 0; and A is as defined above. More specific examples preferably include:

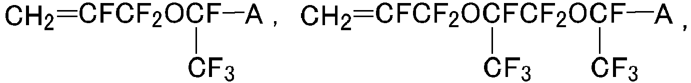

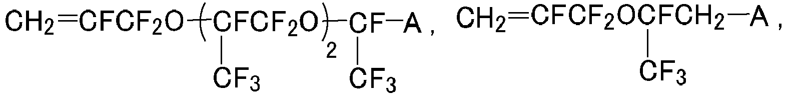

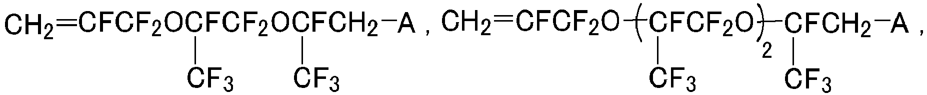

CH₂=CFCF₂OCH₂CF₂-A, CH₂=CFCF₂O(CH₂CF₂CF₂O)CH₂CF₂-A,

CH₂=CFCF₂OCH₂CF₂CH₂-A,

CH₂=CFCF₂O(CH₂CF₂CF₂O)CH₂CF₂CH₂-A,

CH₂=CFCF₂OCF₂CF₂-A, CH₂=CFCF₂O(CF₂CF₂CF₂O)CF₂CF₂-A,

CH₂=CFCF₂OCF₂CF₂CH₂-A,

CH₂=CFCF₂O(CF₂CF₂CF₂O)CF₂CF₂CH₂-A,

CH₂=CFCF₂OCF₂-A, CH₂=CFCF₂O(CF₂CF₂O)CF₂-A,

CH₂=CFCF₂OCF₂CH₂-A,

CH₂=CFCF₂O(CF₂CF₂O)CF₂CH₂-A,

and, in particular, 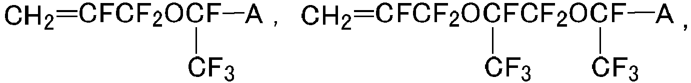 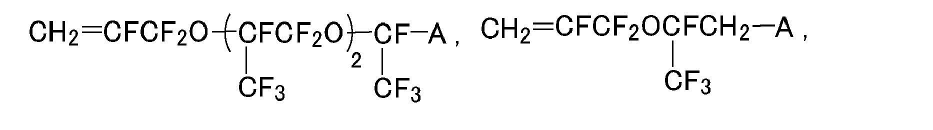 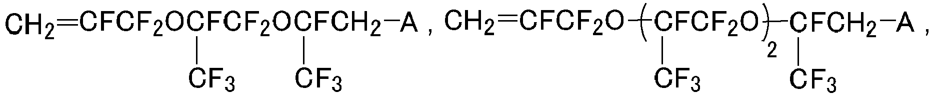 are preferable.

In the monomer represented by the general formula (1A), A in the formula (1A) is preferably -COOM, and, in particular, at least one selected from the group consisting of CH₂=CFCF₂OCF(CF₃)COOM and CH₂=CFCF₂OCF(CF₃)CF₂OCF(CF₃)COOM (wherein M is as defined above) is preferable, and CH₂=CFCF₂OCF(CF₃)COOM is more preferable.

The monomer (I) is also preferably a monomer (2) represented by the general formula (2).

The polymer (I) is also preferably a polymer (2) containing a polymerization unit (2) derived from a monomer represented by the general formula (2):

CX₂=CY(-O-Rf-A) (2)

wherein X is the same or different and is -H or F; Y is -H, - F, an alkyl group, or a fluorine-containing alkyl group; Rf is a fluorine-containing alkylene group having 1 to 40 carbon atoms or a fluorine-containing alkylene group having 2 to 100 carbon atoms and having an ether bond or a keto group; and A is as described above.

The monomer (I) is also preferably a monomer (3) represented by the general formula (3).

The polymer (I) is also preferably a polymer (3) containing a polymerization unit (3) derived from a monomer represented by the general formula (3):

CX₂=CY(-Rf-A) (3)

wherein X is the same or different and is -H or F; Y is -H, - F, an alkyl group, or a fluorine-containing alkyl group; Rf is a fluorine-containing alkylene group having 1 to 40 carbon atoms or a fluorine-containing alkylene group having 2 to 100 carbon atoms and having an ether bond; and A is as described above.

The polymer (I) may be a homopolymer composed solely of the polymerization unit (I), or may be a copolymer containing the polymerization unit (I) and a polymerization unit derived from a further monomer copolymerizable with the monomer represented by the general formula (I). From the viewpoint of solubility in an aqueous medium, a homopolymer composed solely of the polymerization unit (I) is preferable. The polymerization unit (I) may be the same or different at each occurrence, and may contain the polymerization unit (I) derived from two or more different monomers represented by the general formula (I).

The polymer (I) usually has a terminal group. The terminal group is a terminal group produced during polymerization, and a representative terminal group is independently selected from hydrogen, iodine, bromine, a linear or branched alkyl group, and a linear or branched fluoroalkyl group, and may optionally contain at least one catenary heteroatom. The alkyl group or fluoroalkyl group preferably has 1 to 20 carbon atoms. These terminal groups are, in general, produced from an initiator or a chain transfer agent used to form the polymer (I) or produced during a chain transfer reaction.

In the polymer (I), the content of the polymerization unit (I) is, in the order of becoming preferred, 1.0 mol% or more, 3.0 mol% or more, 5.0 mol% or more, 10 mol% or more, 20 mol% or more, 30 mol% or more, 40 mol% or more, 50 mol% or more, 60 mol% or more, 70 mol% or more, 80 mol% or more, or 90 mol% or more based on all polymerization units. It is particularly preferable that the content of the polymerization unit (I) is substantially 100 mol%, and it is most preferable that the polymer (I) is composed solely of the polymerization unit (I).

In the polymer (I), the content of the polymerization unit derived from the further monomer copolymerizable with the monomer represented by the general formula (I) is, in the order of becoming preferred, 99.0 mol% or less, 97.0 mol% or less, 95.0 mol% or less, 90 mol% or less, 80 mol% or less, 70 mol% or less, 60 mol% or less, 50 mol% or less, 40 mol% or less, 30 mol% or less, 20 mol% or less, or 10 mol% or less based on all polymerization units. It is particularly preferable that the content of the polymerization unit derived from the further monomer copolymerizable with the monomer represented by the general formula (I) is substantially 0 mol%, and it is most preferable that the polymer (I) contains no polymerization unit derived from the further monomer.

The polymer (I) can be obtained by polymerizing the monomer (I) using a known method. By polymerizing the monomer (I) in an aqueous medium, a crude composition in which the polymer (I) is dispersed or dissolved in the aqueous medium can be obtained. The crude composition thus obtained usually contains, in total, a dimer and a trimer of the monomer (I) in an amount of more than 1.0% by mass based on the mass of the polymer (I). The content of the dimer and trimer in the crude composition can be specified by carrying out gel permeation chromatography (GPC) analysis of the crude composition and calculating the proportion (area percentage) of the total area of the dimer and trimer peaks to the total area of each peak in the chromatogram obtained by the GPC analysis.

Next, the dimer and trimer of the monomer (I) contained in the crude composition obtained by the polymerization of the monomer (I) are removed from the crude composition. The means for removing the dimer and trimer is not limited, but at least one means selected from the group consisting of ion exchange treatment, ultrafiltration, microfiltration, dialysis membrane treatment, liquid separation, and reprecipitation is preferable, at least one means selected from the group consisting of ion exchange treatment, ultrafiltration, microfiltration, and dialysis membrane treatment is more preferable, ion exchange treatment and ultrafiltration are even more preferable, and ultrafiltration is particularly preferable.

By carrying out such a removal treatment, not only the dimer and trimer of the monomer (I) but also an initiator added at the time of polymerization of the monomer (I) can be removed. Accordingly, even when the obtained polymer (I) is used for polymerizing a fluoromonomer, since the initiator does not remain in the polymer (I), the influence of the initiator added at the time of polymerization of the monomer (I) can be reduced.

### (Fluorine-containing surfactant)

In one embodiment, the fluoropolymer aqueous dispersion is substantially free from a fluorine-containing surfactant. Examples of the fluorine-containing surfactant include anionic fluorine-containing surfactants. The anionic fluorine-containing surfactant may be, for example, a fluorine atom-containing surfactant having 20 or less carbon atoms in total in the portion excluding the anionic group.

The fluorine-containing surfactant may also be a fluorine-containing surfactant in which the molecular weight of the anionic moiety is 1000 or less.

The "anionic moiety" means a portion of the fluorine-containing surfactant excluding the cation. For example, in the case of F(CF₂)ₙ₁COOM represented by the formula (I) described below, the anionic moiety is the "F(CF₂)ₙ₁COO" portion.

Specific examples of the fluorine-containing surfactant include those described in U.S. Patent Application Publication No. 2007/0015864, U.S. Patent Application Publication No. 2007/0015865, U.S. Patent Application Publication No. 2007/0015866, U.S. Patent Application Publication No. 2007/0276103, U.S. Patent Application Publication No. 2007/0117914, U.S. Patent Application Publication No. 2007/142541, U.S. Patent Application Publication No. 2008/0015319, U.S. Patent No. 3250808, U.S. Patent No. 3271341, Japanese Patent Laid-Open No. 2003-119204, International Publication No. WO 2005/042593, International Publication No. WO 2008/060461, International Publication No. WO 2007/046377, Japanese Patent Laid-Open No. 2007-119526, International Publication No. WO 2007/046482, International Publication No. WO 2007/046345, U.S. Patent Application Publication No. 2014/0228531, International Publication No. WO 2013/189824, and International Publication No. WO 2013/189826.

The anionic fluorine-containing surfactant may be a compound represented by the following general formula (N⁰):

Xⁿ⁰-Rfⁿ⁰-Y⁰ (N⁰)

wherein Xⁿ⁰ is H, Cl, or F; Rfⁿ⁰ is a linear, branched, or cyclic alkylene group having 3 to 20 carbon atoms in which some or all of H are replaced by F, the alkylene group optionally containing one or more ether bonds in which some of H are optionally replaced by Cl; and Y⁰ is an anionic group.

The anionic group Y⁰ may be -COOM, -SO₂M, or -SO₃M, and may be -COOM or -SO₃M.

M is H, a metal atom, NR⁷₄, optionally substituted imidazolium, optionally substituted pyridinium, or optionally substituted phosphonium, and R⁷ is H or an organic group.

Examples of the metal atom include alkali metals (Group 1) and alkaline earth metals (Group 2), such as Na, K, or Li.

R⁷ may be H or a C₁₋₁₀ organic group, may be H or a C₁₋₄ organic group, and may be H or a C₁₋₄ alkyl group.

M may be H, a metal atom, or NR⁷₄, may be H, an alkali metal (Group 1), an alkaline earth metal (Group 2), or NR⁷₄, and may be H, Na, K, Li, or NH₄.

In the Rfⁿ⁰, 50% or more of H atoms may be replaced with fluorine atoms.

Examples of the compound represented by the general formula (N⁰) may be a compound represented by the following general formula (N¹):

Xⁿ⁰-(CF₂)ₘ₁-Y⁰ (N¹)

(wherein Xⁿ⁰ is H, Cl, or F, m1 is an integer of 3 to 15, and Y⁰ is as defined above); a compound represented by the following general formula (N²):

Rfⁿ¹-O-(CF(CF₃)CF₂O)ₘ₂CFXⁿ¹-Y⁰ (N²)

(wherein Rfⁿ¹ is a perfluoroalkyl group having 1 to 5 carbon atoms, m2 is an integer of 0 to 3, Xⁿ¹ is F or CF₃, and Y⁰ is as defined above); a compound represented by the following general formula (N³):

Rfⁿ²(CH₂)ₘ₃-(Rfⁿ³)_{q}-Y⁰ (N³)

wherein Rfⁿ² is a partially or fully fluorinated alkyl group having 1 to 13 carbon atoms and optionally containing an ether bond; m3 is an integer of 1 to 3; Rfⁿ³ is a linear or branched perfluoroalkylene group having 1 to 3 carbon atoms; q is 0 or 1; and Y⁰ is as defined above; a compound represented by the following general formula (N⁴):

Rfⁿ⁴-O-(CYⁿ¹Yⁿ²)ₚCF₂-Y⁰ (N⁴)

wherein Rfⁿ⁴ is a linear or branched partially or fully fluorinated alkyl group having 1 to 12 carbon atoms and optionally containing an ether bond and/or a chlorine atom; and Yⁿ¹ and Yⁿ² are the same or different and are each H or F; p is 0 or 1; and Y⁰ is as defined above; and
a compound represented by the general formula (N⁵): 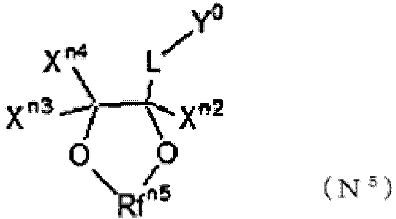 (wherein Xⁿ², Xⁿ³, and Xⁿ⁴ may be the same or different and are each independently H, F, or a linear or branched, partially or fully fluorinated alkyl group having 1 to 6 carbon atoms and optionally containing an ether bond, Rfⁿ⁵ is a linear or branched, partially or fully fluorinated alkylene group having 1 to 3 carbon atoms and optionally containing an ether bond, L is a linking group, and Y⁰ is as defined above, provided that the total number of carbon atoms of Xⁿ², Xⁿ³, Xⁿ⁴, and Rfⁿ⁵ is 18 or less).

More specific examples of the compound represented by the above general formula (N⁰) include a perfluorocarboxylic acid (I) represented by the following general formula (I), an ω-H perfluorocarboxylic acid (II) represented by the following general formula (II), a perfluoroethercarboxylic acid (III) represented by the following general formula (III), a perfluoroalkylalkylenecarboxylic acid (IV) represented by the following general formula (IV), a perfluoroalkoxyfluorocarboxylic acid (V) represented by the following general formula (V), a perfluoroalkylsulfonic acid (VI) represented by the following general formula (VI), an ω-H perfluorosulfonic acid (VII) represented by the following general formula (VII), a perfluoroalkylalkylene sulfonic acid (VIII) represented by the following general formula (VIII), an alkylalkylene carboxylic acid (IX) represented by the following general formula (IX), a fluorocarboxylic acid (X) represented by the following general formula (X), an alkoxyfluorosulfonic acid (XI) represented by the following general formula (XI), a compound (XII) represented by the following general formula (XII), and a compound (XIII) represented by the following general formula (XIII).

The perfluorocarboxylic acid (I) is represented by the following general formula (I):

F(CF₂)ₙ₁COOM (I)

wherein n1 is an integer of 3 to 14, M is H, a metal atom, NR⁷₄, optionally substituted imidazolium, optionally substituted pyridinium, or optionally substituted phosphonium, and R⁷ is H or an organic group.

The ω-H perfluorocarboxylic acid (II) is represented by the following general formula (II):

H(CF₂)ₙ₂COOM (II)

wherein n2 is an integer of 4 to 15, and M is as defined above.

The perfluoroethercarboxylic acid (III) is represented by the following general formula (III):

Rf¹-O-(CF(CF₃)CF₂O)ₙ₃CF(CF₃)COOM (III)

wherein Rf¹ is a perfluoroalkyl group having 1 to 5 carbon atoms, n3 is an integer of 0 to 3, and M is as defined above.

The perfluoroalkylalkylenecarboxylic acid (IV) is represented by the following general formula (IV):

Rf²(CH₂)ₙ₄Rf³COOM (IV)

wherein Rf² is a perfluoroalkyl group having 1 to 5 carbon atoms, Rf³ is a linear or branched perfluoroalkylene group having 1 to 3 carbon atoms, n4 is an integer of 1 to 3, and M is as defined above.

The alkoxyfluorocarboxylic acid (V) is represented by the following general formula (V):

Rf⁴-O-CY¹Y²CF₂-COOM (V)

wherein Rf⁴ is a linear or branched, partially or fully fluorinated alkyl group having 1 to 12 carbon atoms and optionally containing an ether bond and/or a chlorine atom; Y¹ and Y² are the same or different and are each independently H or F; and M is as defined above.

The perfluoroalkylsulfonic acid (VI) is represented by the following general formula (VI):

F(CF₂)ₙ₅SO₃M (VI)

wherein n5 is an integer of 3 to 14, and M is as defined above.

The ω-H perfluorosulfonic acid (VII) is represented by the following general formula (VII):

H(CF₂)ₙ₆SO₃M (VII)

wherein n6 is an integer of 4 to 14, and M is as defined above.

The perfluoroalkylalkylenesulfonic acid (VIII) is represented by the following general formula (VIII):

Rf⁵(CH₂)ₙ₇SO₃M (VIII)

wherein Rf⁵ is a perfluoroalkyl group having 1 to 13 carbon atoms, n7 is an integer of 1 to 3, and M is as defined above.

The alkylalkylenecarboxylic acid (IX) is represented by the following general formula (IX):

Rf⁶(CH₂)ₙ₈COOM (IX)

wherein Rf⁶ is a linear or branched, partially or fully fluorinated alkyl group having 1 to 13 carbon atoms and optionally containing an ether bond, n8 is an integer of 1 to 3, and M is as defined above.

The fluorocarboxylic acid (X) is represented by the following general formula (X):

Rf⁷-O-Rf⁸-O-CF₂-COOM (X)

wherein Rf⁷ is a linear or branched, partially or fully fluorinated alkyl group having 1 to 6 carbon atoms and optionally containing an ether bond and/or a chlorine atom; Rf⁸ is a linear or branched, partially or fully fluorinated alkyl group having 1 to 6 carbon atoms; and M is as defined above.

The alkoxyfluorosulfonic acid (XI) is represented by the following general formula (XI):

Rf⁹-O-CY¹Y²CF₂-SO₃M (XI)

wherein Rf⁹ is a linear or branched, partially or fully fluorinated alkyl group having 1 to 12 carbon atoms and optionally containing an ether bond and optionally containing chlorine; Y¹ and Y² are the same or different and are each independently H or F; and M is as defined above.

The compound (XII) is represented by the following general formula (XII): 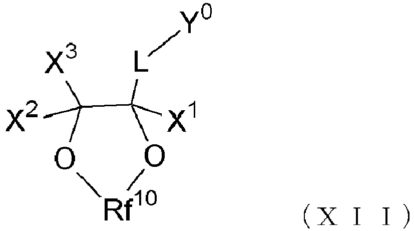 wherein X¹, X², and X³ may be the same or different and are each independently H, F, or a linear or branched, partially or fully fluorinated alkyl group having 1 to 6 carbon atoms and optionally containing an ether bond; Rf¹⁰ is a perfluoroalkylene group having 1 to 3 carbon atoms; L is a linking group; and Y⁰ is an anionic group.

Y⁰ may be -COOM, -SO₂M, or -SO₃M, and may be -SO₃M or COOM, wherein M is as defined above.

Examples of L include a single bond, and a partially or fully fluorinated alkylene group having 1 to 10 carbon atoms and optionally containing an ether bond.

The compound (XIII) is represented by the following general formula (XIII):

Rf¹¹-O-(CF₂CF(CF₃)O)ₙ₉(CF₂O)ₙ₁₀CF₂COOM (XIII)

wherein Rf¹¹ is a fluoroalkyl group having 1 to 5 carbon atoms containing chlorine, n9 is an integer of 0 to 3, n10 is an integer of 0 to 3, and M is as defined above. Examples of the compound (XIII) include CF₂ClO(CF₂CF(CF₃)O)ₙ₉(CF₂O)ₙ₁₀CF₂COONH₄ (a mixture having an average molecular weight of 750, n9 and n10 in the formula are defined above).

As described above, examples of the anionic fluorine-containing surfactant include a carboxylic acid-based surfactant and a sulfonic acid-based surfactant.

The fluorine-containing surfactant may be a single fluorine-containing surfactant, or may be a mixture containing two or more fluorine-containing surfactants.

### (Anionic hydrocarbon surfactant)

In one embodiment, the fluoropolymer aqueous dispersion contains an anionic hydrocarbon surfactant. By using the anionic hydrocarbon surfactant, dispersion stability of the fluoropolymer aqueous dispersion can be further improved.

The content of the anionic hydrocarbon surfactant in the fluoropolymer aqueous dispersion is preferably 10 to 5,000 mass ppm and more preferably 50 mass ppm or more, and is preferably 3,000 mass ppm or less and more preferably 2,000 mass ppm or less based on the fluoropolymer.

As the anionic hydrocarbon surfactant, for example, anionic hydrocarbon surfactants described in International Publication No. WO 2013/146950 and International Publication No. WO 2013/146947 can be used. Examples thereof include those having a saturated or unsaturated aliphatic chain with 6 to 40 carbon atoms, preferably 8 to 20 carbon atoms, and more preferably with 9 to 13 carbon atoms. The saturated or unsaturated aliphatic chain may be either linear or branched, or may have a cyclic structure. The hydrocarbon may be aromatic, or may have an aromatic group. The hydrocarbon may contain a hetero atom such as oxygen, nitrogen, or sulfur.

Examples of the anionic hydrocarbon surfactant include: alkyl sulfonate, alkyl sulfate, alkylaryl sulfate, and salts thereof; aliphatic (carboxylic) acids and salts thereof; and phosphoric acid alkyl ester, phosphoric acid alkylaryl ester, and salts thereof, and preferred is alkyl sulfonate, alkyl sulfate, aliphatic carboxylic acid, or a salt thereof.

The alkyl sulfate or the salt thereof is preferably ammonium lauryl sulfate or sodium lauryl sulfate.

The aliphatic carboxylic acid or the salt thereof is preferably succinic acid, decanoic acid, undecanoic acid, undecenoic acid, lauric acid, hydrododecanoic acid, or a salt thereof.

### (Further component)

In one embodiment, the fluoropolymer aqueous dispersion contains a further component. The further component may be a preservative.

Examples of the preservative include isothiazolones, azoles, pronopol, chlorothalonil, methylsulfonyltetrachloropyrrolidine, carbendazim, fluoroforbet, sodium diacetate, and diiodomethyl p-tolylsulfone.

The content of the preservative in the fluoropolymer aqueous dispersion is preferably 0.01 to 0.5% by mass and more preferably 0.05 to 0.2% by mass based on the fluoropolymer.

Examples of the further component also include a water-soluble polymer compound. Examples of the water-soluble polymer compound include methyl cellulose, alumina sol, polyvinyl alcohol, carboxylated vinyl polymer, polyethylene oxide (dispersion stabilizer), polyethylene glycol (dispersion stabilizer), polyvinylpyrrolidone (dispersion stabilizer), phenol resin, urea resin, epoxy resin, melamine resin, polyester resin, polyether resin, acrylic silicone resin, silicone resin, silicone polyester resin, and polyurethane resin.

### (Production method)

The fluoropolymer aqueous dispersion of the present disclosure can be produced by, for example, a method for producing a fluoropolymer aqueous dispersion, the method comprising:
polymerizing a fluoromonomer in an aqueous medium substantially in the absence of a fluorine-containing surfactant and in the presence of a polymer (I) having a hydrophilic group to thereby prepare a polymerization dispersion containing a fluoropolymer, the polymer (I), and the aqueous medium;
mixing the polymerization dispersion and a nonionic surfactant (a) to prepare a pre-concentration composition;
carrying out concentration of the pre-concentration composition to prepare a post-concentration composition; and
adding a nonionic surfactant (b) to the post-concentration composition to prepare a fluoropolymer aqueous dispersion.

### (Preparation of polymerization dispersion by polymerization)

In one embodiment of the production method, a fluoromonomer is polymerized in an aqueous medium substantially in the absence of a fluorine-containing surfactant and in the presence of a polymer (I) having a hydrophilic group to thereby prepare a polymerization dispersion. The resulting polymerization dispersion contains a fluoropolymer, the polymer (I), and the aqueous medium.

### (Fluoromonomer)

The fluoromonomer used in the production method of the present disclosure preferably has at least one double bond. The fluoromonomer is preferably at least one selected from the group consisting of tetrafluoroethylene (TFE), hexafluoropropylene (HFP), chlorotrifluoroethylene (CTFE), vinyl fluoride, vinylidene fluoride (VDF), trifluoroethylene, fluoroalkyl vinyl ether, fluoroalkyl ethylene, fluoroalkyl allyl ether, trifluoropropylene, pentafluoropropylene, trifluorobutene, tetrafluoroisobutene, hexafluoroisobutene, a fluoromonomer represented by the general formula (100): CHX¹⁰¹=CX¹⁰²Rf¹⁰¹ (wherein one of X¹⁰¹ and X¹⁰² is H and the other is F, and Rf¹⁰¹ is a linear or branched fluoroalkyl group having 1 to 12 carbon atoms), a fluorinated vinyl heterocyclic compound, and a monomer that provides a crosslinking site.

The fluoroalkyl vinyl ether is preferably, for example,
a fluoromonomer represented by the general formula (110): CF₂=CF-ORf¹¹¹
wherein Rf¹¹¹ represents a perfluoro organic group.

In particular, the fluoromonomer represented by the general formula (110) is preferably
a fluoromonomer represented by the general formula (160): CF₂=CF-ORf¹⁶¹
wherein Rf¹⁶¹ represents a perfluoroalkyl group having 1 to 10 carbon atoms. Rf1⁶¹ is preferably a perfluoroalkyl group having 1 to 5 carbon atoms.

The fluoromonomer represented by the general formula (160) is preferably at least one selected from the group consisting of perfluoro(methyl vinyl ether), perfluoro(ethyl vinyl ether), and perfluoro(propyl vinyl ether), and is more preferably at least one selected from the group consisting of perfluoro(methyl vinyl ether) and perfluoro(propyl vinyl ether).

The fluoromonomer represented by the general formula (100) is preferably a fluoromonomer in which Rf¹⁰¹ is a linear fluoroalkyl group, and more preferably a fluoromonomer in which Rf¹⁰¹ is a linear perfluoroalkyl group. Rf1⁰¹ preferably has 1 to 6 carbon atoms. Examples of the fluoromonomer represented by the general formula (100) include CH₂=CFCF₃, CH₂=CFCF₂CF₃, CH₂=CFCF₂CF₂CF₃, CH₂=CFCF₂CF₂CF₂H, CH₂=CFCF₂CF₂CF₂CF₃, CHF=CHCF₃ (E isomer), and CHF=CHCF₃ (Z isomer), and, in particular, 2,3,3,3-tetrafluoropropylene represented by CH₂=CFCF₃ is preferable.

The fluoroalkyl ethylene is preferably a fluoroalkyl ethylene represented by the

general formula (170): CH₂=CH-(CF₂)ₙ-X¹⁷¹

(wherein X¹⁷¹ is H or F; and n is an integer of 3 to 10), and more preferably at least one selected from the group consisting of CH₂=CH-C₄F₉ and CH₂=CH-C₆F₁₃.

An example of the fluoroalkyl allyl ether is a fluoromonomer represented by the

general formula (180): CF₂=CF-CF₂-ORf¹¹¹

wherein Rf¹¹¹ represents a perfluoro organic group.

Rf¹¹¹ in the general formula (180) is the same as Rf¹¹¹ in the general formula (110). Rf1¹¹ is preferably a perfluoroalkyl group having 1 to 10 carbon atoms or a perfluoroalkoxyalkyl group having 1 to 10 carbon atoms. The fluoroalkyl allyl ether represented by the general formula (180) is preferably at least one selected from the group consisting of CF₂=CF-CF₂-O-CF₃, CF₂=CF-CF₂-O-C₂F₅, CF₂=CF-CF₂-O-C₃F₇, and CF₂=CF-CF₂-O-C₄F₉, more preferably at least one selected from the group consisting of CF₂=CF-CF₂-O-C₂F₅, CF₂=CF-CF₂-O-C₃F₇, and CF₂=CF-CF₂-O-C₄F₉, and even more preferably CF₂=CF-CF₂-O-CF₂CF₂CF₃.

An example of the fluorinated vinyl heterocyclic compound is a fluorinated vinyl heterocyclic compound represented by the general formula (230): 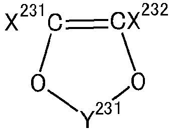 wherein X²³¹ and X²³² are each independently F, Cl, a methoxy group, or a fluorinated methoxy group; and Y²³¹ is represented by the formula Y²³² or the formula Y²³³: 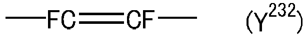 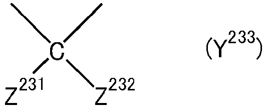 wherein Z²³¹ and Z²³² are each independently F or a fluorinated alkyl group having 1 to 3 carbon atoms.

The monomer that provides a crosslinking site is preferably at least one selected from the group consisting of: CF₂=CFOCF₂CF(CF₃)OCF₂CF₂CN, CF₂=CFOCF₂CF(CF₃)OCF₂CF₂COOH, CF₂=CFOCF₂CF(CF₃)OCF₂CF₂CH₂I, CF₂=CFOCF₂CF₂CH₂I, CH₂=CFCF₂OCF(CF₃)CF₂OCF(CF₃)CN, CH₂=CFCF₂OCF(CF₃)CF₂OCF(CF₃)COOH, CH₂=CFCF₂OCF(CF₃)CF₂OCF(CF₃)CH₂OH, CH₂=CHCF₂CF₂I, CH₂=CH(CF₂)₂CH=CH₂, CH₂=CH(CF₂)₆CH=CH₂, and CF₂=CFO(CF₂)₅CN, and is more preferably at least one selected from the group consisting of CF₂=CFOCF₂CF(CF₃)OCF₂CF₂CN and CF₂=CFOCF₂CF₂CH₂I.

In the polymerization, the fluoromonomer may be polymerized with a fluorine-free monomer. An example of the fluorine-free monomer is a hydrocarbon monomer that is reactive with the fluoromonomer.

In the polymerization, desired fluoropolymer particles can be obtained by polymerizing one or two or more of the above fluoromonomers.

### (Polymerization)

The polymerization of the fluoromonomer is carried out substantially in the absence of a fluorine-containing surfactant (except for a compound having a functional group capable of reacting by radical polymerization and a hydrophilic group). While fluorine-containing surfactants are conventionally used in the polymerization of fluoromonomers in an aqueous medium, the production method of the present disclosure enables a fluoropolymer to be obtained even without using the fluorine-containing surfactants.

The expression "substantially in the absence of a fluorine-containing surfactant" as used herein means that the amount of the fluorine-containing surfactant is 10 mass ppm or less based on the aqueous medium. The amount of the fluorine-containing surfactant is preferably 1 mass ppm or less, more preferably 100 mass ppb or less, even more preferably 10 mass ppb or less, and yet more preferably 1 mass ppb or less based on the aqueous medium.

The fluoromonomer is polymerized in the presence of a polymer (I). The amount of the polymer (I) added to the polymerization is preferably more than 0.02% by mass and 10% by mass or less based on the aqueous medium, and the more preferable upper limit is 1% by mass or less. When the amount of the polymer (I) added is within the above range, polymerization of the fluoromonomer in the aqueous medium can progress smoothly. The amount of the polymer (I) added is the total amount of the polymer (I) added to the polymerization.

In the polymerization, the entirety of the polymer (I) may be added at once, or the polymer (I) may be added continuously. Adding the polymer (I) continuously means, for example, adding the polymer (I) not at once, but adding over time and without interruption or adding in portions. In the polymerization, an aqueous solution containing the polymer (I) and water may be prepared, and the aqueous solution may be added.

In the polymerization, it is preferable to initiate the addition of the polymer (I) before the solid content of the fluoropolymer formed in the aqueous medium reaches 0.5% by mass, and add the polymer (I) continuously thereafter as well. The timing to initiate adding the polymer (I) is preferably before the solid content of the fluoropolymer reaches 0.3% by mass, more preferably before it reaches 0.2% by mass, even more preferably before it reaches 0.1% by mass, and particularly preferably at the same time as the beginning of polymerization. The solid content is the content of the fluoropolymer based on the total amount of the aqueous medium and the fluoropolymer.

In the polymerization, the use of at least one of the polymers (I) enables a fluoropolymer to be efficiently produced. Also, two or more of the compounds encompassed within the polymer (I) may be used at the same time, and a compound having a surfactant function other than the polymer (I) may also be used in combination insofar as the compound is volatile or is allowed to remain in a molded body formed from the fluoropolymer or the like.

In the polymerization, a nucleating agent may be used. The amount of the nucleating agent added can be suitably selected according to the type of the nucleating agent. The amount of the nucleating agent added may be 5,000 ppm by mass or less based on the aqueous medium, and is preferably 1,000 ppm by mass or less, more preferably 500 ppm by mass or less, even more preferably 100 ppm by mass or less, particularly preferably 50 ppm by mass or less, and most preferably 10 ppm by mass or less.

In the polymerization, it is preferable to add the nucleating agent to the aqueous medium before the beginning of polymerization or before the solid content of the fluoropolymer formed in the aqueous medium reaches 5.0% by mass. Adding the nucleating agent at the initial stage of the polymerization enables an aqueous dispersion having a small average primary particle size and excellent stability to be obtained.

The amount of the nucleating agent added at the initial stage of the polymerization is preferably 0.001% by mass or more, more preferably 0.01% by mass or more, even more preferably 0.05% by mass or more, and particularly preferably 0.1% by mass or more based on the resulting fluoropolymer. The upper limit of the amount of the nucleating agent added at the initial stage of the polymerization may be, but is not limited to, 2,000% by mass.

The use of the nucleating agent enables a fluoropolymer having a smaller primary particle size to be obtained than that in the case of polymerization in the absence of the above nucleating agent.

Examples of the nucleating agent include dicarboxylic acids, perfluoropolyether (PFPE) acids or salts thereof, and hydrocarbon-containing surfactants. The nucleating agent is preferably free from an aromatic ring, and is preferably an aliphatic compound.

Although the nucleating agent is preferably added before addition of the polymerization initiator or simultaneously with addition of the polymerization initiator, it is also possible to adjust the particle size distribution by adding the nucleating agent during the polymerization.

The amount of the dicarboxylic acid is preferably 1,000 ppm by mass or less, more preferably 500 ppm by mass or less, and even more preferably 100 ppm by mass or less based on the aqueous medium.

The perfluoropolyether (PFPE) acids or salts thereof may have any chain structure in which oxygen atoms in the main chain of the molecule are separated by saturated carbon fluoride groups having 1 to 3 carbon atoms. Two or more carbon fluoride groups may be present in the molecule. Representative structures have repeating units represented by the following formulas:

(-CFCF₃-CF₂-O-)ₙ (VII)

(-CF₂-CF₂-CF₂-O-)ₙ (VIII)

(-CF₂-CF₂-O-)ₙ-(-CF₂-O-)ₘ (IX)

(-CF₂-CFCF₃-O-)n-(-CF₂-O-)ₘ (X)

These structures are described in Kasai, J. Appl. Polymer Sci., 57, 797(1995). As disclosed in this document, the PFPE acid or a salt thereof may have a carboxylic acid group or a salt thereof at one end or both ends. The PFPE acid or a salt thereof may also have a sulfonic acid, a phosphonic acid group, or a salt thereof at one end or both ends. The PFPE acid or a salt thereof may have different groups at each end. Regarding monofunctional PFPE, the other end of the molecule is usually perfluorinated, but may contain a hydrogen or chlorine atom. The PFPE acid or a salt thereof has at least two ether oxygen atoms, preferably at least four ether oxygen atoms, and even more preferably at least six ether oxygen atoms. Preferably, at least one carbon fluoride group separating ether oxygen atoms, more preferably at least two of such carbon fluoride groups, have 2 or 3 carbon atoms. Even more preferably, at least 50% of the carbon fluoride groups separating ether oxygen atoms has 2 or 3 carbon atoms. Also preferably, the PFPE acid or a salt thereof has at least 15 carbon atoms in total, and for example, a preferable minimum value of n or n + m in the repeating unit structure is at least 5. Two or more of the PFPE acids and salts thereof having an acid group at one end or both ends may be used in the production method of the present disclosure. The PFPE acid or a salt thereof preferably has a number average molecular weight of less than 6,000 g/mol.

The hydrocarbon-containing surfactant is preferably added in an amount of 40 ppm by mass or less, more preferably 30 ppm by mass or less, and even more preferably 20 ppm by mass or less based on the aqueous medium. The amounts in ppm of the oleophilic nucleation sites present in the aqueous medium will be less than the amounts in ppm disclosed herein as being added to the aqueous medium. Thus, the amounts of oleophilic nucleation sites will each be less than the 40 ppm by mass, 30 ppm by mass, and 20 ppm by mass as described above. Since oleophilic nucleation sites are considered to exist as molecules, even a small amount of the hydrocarbon-containing surfactant can generate a large amount of oleophilic nucleation sites. Thus, addition of as little as 1 ppm by mass of the hydrocarbon-containing surfactant to the aqueous medium can provide a beneficial effect. A preferable lower limit is 0.01 mass ppm.

The hydrocarbon-containing surfactant encompasses nonionic surfactants and cationic surfactants, including siloxane surfactants such as those disclosed in U.S. Patent No. 7,897,682 (Brothers et al.) and U.S. Patent No. 7,977,438 (Brothers et al.).

The hydrocarbon-containing surfactant is preferably a nonionic surfactant (for example, a nonionic hydrocarbon surfactant). In other words, the nucleating agent is preferably a nonionic surfactant. The nonionic surfactant is preferably free from an aromatic moiety.

The nonionic surfactant may be a nonionic surfactant that can be contained in the fluoropolymer aqueous dispersion.

In the polymerization, a compound having a functional group capable of reaction by radical polymerization and a hydrophilic group may be used together with the polymer (I). As the compound having a functional group capable of reaction by radical polymerization and a hydrophilic group, the same compound as a modifying monomer (A), which will be described below, can be used.

In the polymerization, in addition to the polymer (I) and other compounds having a surfactant function used as necessary, an additive may also be used to stabilize the compounds. Examples of the additive include a buffer, a pH adjuster, a stabilizing aid, and a dispersion stabilizer.

The stabilizing aid is preferably paraffin wax, fluorine-containing oil, a fluorine-containing solvent, silicone oil, or the like. One stabilizing aid may be used singly, or two or more may be used in combination. The stabilizing aid is more preferably paraffin wax. Paraffin wax may be in the form of a liquid, semi-solid, or solid at room temperature, and is preferably a saturated hydrocarbon having 12 or more carbon atoms. Usually, the melting point of paraffin wax is preferably 40 to 65°C, and more preferably 50 to 65°C.

The amount of the stabilizing aid used is preferably 0.1 to 12% by mass and more preferably 0.1 to 8% by mass based on the mass of the aqueous medium used. Desirably, the stabilizing aid is sufficiently hydrophobic so that the stabilizing aid is completely separated from the aqueous dispersion after polymerization, and does not serve as a contaminating component.

The polymerization is performed by charging a polymerization reactor with an aqueous medium, the polymer (I), a monomer, and optionally a further additive, stirring the contents of the reactor, maintaining the reactor at a predetermined polymerization temperature, and adding a predetermined amount of a polymerization initiator to thereby initiate the polymerization reaction. After the beginning of the polymerization reaction, the components such as the monomer, the polymerization initiator, a chain transfer agent, and the polymer (I) may additionally be added depending on the purpose. The polymer (I) may be added after the polymerization reaction is initiated.

Usually, the polymerization temperature is 5 to 120°C, and the polymerization pressure is 0.05 to 10 MPaG. The polymerization temperature and the polymerization pressure are suitably determined according to the type of monomer used, the molecular weight of the target fluoropolymer, and the reaction rate.

The polymerization initiator may be any polymerization initiator capable of generating radicals within the polymerization temperature range, and known oil-soluble and/or water-soluble polymerization initiators may be used. The polymerization initiator may be combined with a reducing agent, for example, to form a redox agent, which initiates the polymerization. The concentration of the polymerization initiator is suitably determined according to the type of monomer, the molecular weight of the target fluoropolymer, and the reaction rate.

The polymerization initiator may be an oil-soluble radical polymerization initiator or a water-soluble radical polymerization initiator.

The oil-soluble radical polymerization initiator may be a known oil-soluble peroxide, and representative examples thereof include dialkyl peroxycarbonates such as diisopropyl peroxydicarbonate and di-sec-butyl peroxydicarbonate; peroxy esters such as t-butyl peroxyisobutyrate and t-butyl peroxypivalate; and dialkyl peroxides such as di-t-butyl peroxide.

The water-soluble radical polymerization initiator may be a known water-soluble peroxide, and examples thereof include ammonium salts, potassium salts, and sodium salts of persulphuric acid, perboric acid, perchloric acid, perphosphoric acid, and percarbonic acid, organic peroxides of disuccinic acid peroxide and diglutaric acid peroxide, t-butyl permaleate, and t-butyl hydroperoxide. A reducing agent such as a sulfite may be contained together, and the amount thereof may be 0.1 to 20 times the amount of the peroxide.

For example, in a case where the polymerization is performed at a low temperature of 30°C or lower, the polymerization initiator used is preferably a redox initiator obtained by combining an oxidizing agent and a reducing agent. Examples of the oxidizing agent include persulfates, organic peroxides, potassium permanganate, manganese triacetate, and ammonium cerium nitrate. Examples of the reducing agent include sulfites, bisulfites, bromates, diimines, and oxalic acid. Examples of persulfate include ammonium persulfate and potassium persulfate. Examples of sulfites include sodium sulfite and ammonium sulfite. In order to increase the decomposition rate of the initiator, the combination of the redox initiator also preferably contains a copper salt or an iron salt. An example of the copper salt is copper(II) sulfate, and an example of the iron salt is iron(II) sulfate.

Examples of the redox initiator include potassium permanganate/oxalic acid, potassium permanganate/ammonium oxalate, ammonium persulfate/bisulfite/iron sulfate, manganese triacetate/oxalic acid, ammonium cerium nitrate/oxalic acid, and bromate/bisulfite, and potassium permanganate/oxalic acid is preferable. In the case of using a redox initiator, either an oxidizing agent or a reducing agent may be charged into a polymerization tank in advance, followed by adding the other continuously or intermittently thereto to initiate the polymerization. For example, in the case of potassium permanganate/oxalic acid, preferably oxalic acid is charged into a polymerization tank and potassium permanganate is continuously added thereto.

The amount of the polymerization initiator added is not limited, and the polymerization initiator is added in an amount that does not significantly decrease the polymerization rate (e.g., a concentration of several ppm in water) or more at once in the initial stage of polymerization, or added successively or continuously. The upper limit is within a range where the reaction temperature is allowed to increase while the polymerization reaction heat is removed through the device surface, and the upper limit is more preferably within a range where the polymerization reaction heat can be removed through the device surface.

In the polymerization, known chain transfer agents, radical scavengers, and decomposers may be added to regulate the polymerization rate and the molecular weight depending on the purpose.

Examples of the chain transfer agent include esters such as dimethyl malonate, diethyl malonate, methyl acetate, ethyl acetate, butyl acetate, and dimethyl succinate, as well as isopentane, methane, ethane, propane, methanol, isopropanol, acetone, various mercaptans, various halogenated hydrocarbons such as carbon tetrachloride, and cyclohexane.

The chain transfer agent may be a bromine compound or an iodine compound. An example of a polymerization method involving a bromine compound or an iodine compound is a method in which the fluoromonomer is polymerized in an aqueous medium substantially in the absence of oxygen and in the presence of a bromine compound or an iodine compound (iodine transfer polymerization). Representative examples of the bromine compound or the iodine compound to be used include compounds represented by the following general formula:

R^{a}IₓBr_{y}

wherein x and y are each independently an integer of 0 to 2 and satisfy 1 ≤ x+y ≤ 2, and R^{a} is a saturated or unsaturated fluorohydrocarbon group or chlorofluorohydrocarbon group having 1 to 16 carbon atoms, or a hydrocarbon group having 1 to 3 carbon atoms, and may contain an oxygen atom. By using a bromine compound or an iodine compound, iodine or bromine is introduced into the polymer, and serves as a crosslinking point.

Examples of the bromine compound or the iodine compound include 1,3-diiodoperfluoropropane, 2-iodoperfluoropropane, 1,3-diiodo-2-chloroperfluoropropane, 1,4-diiodoperfluorobutane, 1,5-diiodo-2,4-dichloroperfluoropentane, 1,6-diiodoperfluorohexane, 1,8-diiodoperfluorooctane, 1,12-diiodoperfluorododecane, 1,16-diiodoperfluorohexadecane, diiodomethane, 1,2-diiodoethane, 1,3-diiodo-n-propane, CF₂Br₂, BrCF₂CF₂Br, CF₃CFBrCF₂Br, CFClBr₂, BrCF₂CFClBr, CFBrClCFClBr, BrCF₂CF₂CF₂Br, BrCF₂CFBrOCF₃, 1-bromo-2-iodoperfluoroethane, 1-bromo-3-iodoperfluoropropane, 1-bromo-4-iodoperfluorobutane, 2-bromo-3-iodoperfluorobutane, 3-bromo-4-iodoperfluorobutene-1,2-bromo-4-iodoperfluorobutene-1, and a monoiodomonobromo-substituted product, a diiodomonobromo-substituted product, and a (2-iodoethyl) and (2-bromoethyl)-substituted product of benzene, and one of these compounds may be used singly, or these compounds can also be used as a combination.

Among these, 1,4-diiodoperfluorobutane, 1,6-diiodoperfluorohexane, and 2-iodoperfluoropropane are preferably used from the viewpoint of polymerization reactivity, crosslinkability, availability, and the like.

The amount of the chain transfer agent used is usually 1 to 50,000 ppm by mass, preferably 1 to 20,000 ppm by mass based on the total amount of the fluoromonomer fed.

The chain transfer agent may be added to the reaction vessel at once before the beginning of the polymerization, may be added at once after the beginning of the polymerization, may be added in multiple portions during the polymerization, or may be added continuously during the polymerization.

As a polymerization initiator, persulfate (such as ammonium persulfate) and organic peroxide such as disuccinic acid peroxide or diglutaric acid peroxide can be used alone or in the form of a mixture thereof. Further, the polymerization initiator may be used together with a reducing agent such as sodium sulfite so as to form a redox system. Moreover, the concentration of radicals in the system can be also regulated by adding a radical scavenger such as hydroquinone or catechol or adding a peroxide decomposer such as ammonium sulfate during polymerization.

In the polymerization, the fluoropolymer may be obtained by polymerizing the fluoromonomer in the aqueous medium in the presence of the polymer (I) to produce an aqueous dispersion of fluoropolymer particles, and by seed-polymerizing the fluoromonomer to the fluoropolymer particles in the aqueous dispersion of the fluoropolymer particles.

The content (solid concentration) of the fluoropolymer in the polymerization dispersion is usually 10 to 50% by mass, more preferably 15% by mass or more, and preferably 40% by mass or less, and more preferably 35% by mass or less.

The content of the fluoropolymer in the polymerization dispersion is a value obtained by drying 1 g of the polymerization dispersion in an air dryer at 150°C for 60 minutes, measuring the mass of non-volatile matter, and calculating the proportion of the mass of the non-volatile matter based on the mass (1 g) of the polymerization dispersion in percentage.

### (Preparation of pre-concentration composition)

In one embodiment of the production method, the polymerization dispersion obtained by polymerization of the fluoromonomer and a nonionic surfactant (a) are mixed to prepare a pre-concentration composition. The resulting pre-concentration composition contains the fluoropolymer, the polymer (I), the aqueous medium, and the nonionic surfactant (a).

The content of the nonionic surfactant (a) in the pre-concentration composition is preferably 1.0% by mass or more, and is preferably 40% by mass or less, more preferably 30% by mass or less, and even more preferably 25% by mass or less based on the fluoropolymer. An excessively small content of the nonionic surfactant (a) makes it difficult to carry out concentration, and an excessively large content of the nonionic surfactant (a) may deteriorate economy.

The content (solid concentration) of the fluoropolymer in the pre-concentration composition is usually 8 to 50% by mass, preferably 10% by mass or more, and more preferably 15% by mass or more, and preferably 40% by mass or less, and more preferably 35% by mass or less.

The pH of the pre-concentration composition is preferably 4.0 to 11.5, more preferably 7.0 or higher, even more preferably 8.0 or higher, and particularly preferably 9.0 or higher. By regulating the pH of the pre-concentration composition to be within the above range, the rate of concentration can be further increased.

In one embodiment, the pre-concentration composition contains a fluorine-containing surfactant. Even when the pre-concentration composition contains a fluorine-containing surfactant, the fluorine-containing surfactant is removed from the composition by carrying out concentration, and a fluoropolymer aqueous dispersion having a reduced content of the fluorine-containing surfactant can be obtained.

In one embodiment, the pre-concentration composition is substantially free from a fluorine-containing surfactant.

Herein, the phrase "is substantially free from a fluorine-containing surfactant" means that the content of the fluorine-containing surfactant in the pre-concentration composition is 10 mass ppm or less, preferably 1 mass ppm or less, more preferably 100 mass ppb or less, even more preferably 10 mass ppb or less, yet more preferably 1 mass ppb or less, and particularly preferably less than the detection limit of measurement by liquid chromatography-mass spectrometry (LC/MS).

The content of the fluorine-containing surfactant in the pre-concentration composition can be measured by the same method as the method for measuring the content of the fluorine-containing surfactant in the aqueous dispersion.

### (Preparation of post-concentration composition by concentration)

In one embodiment of the production method, concentration of the pre-concentration composition is carried out to prepare a post-concentration composition. The resulting post-concentration composition contains the fluoropolymer, the polymer (I), the aqueous medium, and the nonionic surfactant (a).

Before concentration of the pre-concentration composition or during concentration of the pre-concentration composition, an aqueous medium such as water or an alcohol may be added to the composition. The aqueous medium may be a single component of water or an alcohol or the like or may be a mixture of water and an alcohol or the like.

Examples of the concentration method include phase separation concentration, electrophoresis, an ion exchanger method, and membrane concentration. The phase separation concentration, ion exchanger method, and membrane concentration method can be carried out under conventionally known treatment conditions, and can be carried out by, but are not limited to, the methods disclosed in International Publication No. WO 2004/050719, National Publication of International Patent Application No. 2002-532583, and Japanese Patent Laid-Open No. 55-120630.

The concentration method is preferably phase separation concentration. The phase separation concentration can be performed, for example, by heating the pre-concentration composition to cause phase separation into a fluoropolymer-free phase (supernatant phase) and a fluoropolymer-containing phase (condensed phase), removing the fluoropolymer-free phase, and recovering the fluoropolymer-containing phase (condensed phase).

The recovered fluoropolymer-containing phase (condensed phase) contains the fluoropolymer, the polymer (I), the aqueous medium, and the nonionic surfactant (a).

The temperature of the phase separation concentration can be selected in reference to the cloud point of the nonionic surfactant (a) contained in the pre-concentration composition. The temperature of the phase separation concentration is preferably 10°C lower than the cloud point of the nonionic surfactant (a) or higher, and preferably 10°C higher than the cloud point of the nonionic surfactant (a) or lower.

In the production method of the present disclosure, the phase separation concentration may be repeated.

The number of repeats is not limited, and is preferably 2 or more and more preferably 3 or more. The upper limit of the number is not limited, and may be, for example, 10 or less.

In the case where the phase separation concentration is repeated two or more times, the first phase separation concentration is preferably performed by heating the composition at a temperature equal to or higher than a temperature that is 10°C lower than the cloud point of the nonionic surfactant (a) and then allowing the composition to stand still to separate it into a supernatant phase and a condensed phase. The second or subsequent phase separation concentration is preferably performed by heating the composition at a temperature equal to or higher than a temperature that is 10°C lower than the cloud point of the nonionic surfactant (a) and then allowing the composition to stand still to separate it into a supernatant phase and a condensed phase.

### (Addition of nonionic surfactant (b))

In one embodiment of the production method, a nonionic surfactant (b) is added to the post-concentration composition to prepare a fluoropolymer aqueous dispersion. As a result, the fluoropolymer aqueous dispersion of the present disclosure can be obtained.

In addition to the nonionic surfactant (b), the above-described nonionic surfactant (a) may be added to the post-concentration composition. In addition to the nonionic surfactant (b), the above-described hydrocarbon anionic surfactant may be added to the post-concentration composition. Also, in addition to the nonionic surfactant (b), the above-described further component such as preservative may be added to the post-concentration composition.

For the purpose of adjusting the pH of the post-concentration composition, a pH adjuster such as ammonia water may be mixed thereinto.

The pH of the fluoropolymer aqueous dispersion obtained by concentration is preferably 8 to 13, more preferably 9 to 12, and even more preferably 9 to 11.

The pH is a value measured at 25°C in accordance with JIS K6893.

Next, the fluoropolymer in the aqueous dispersion of the present disclosure and the fluoropolymer in the aqueous dispersion obtained by the production method of the present disclosure will now be described in more detail.

### (Fluoropolymer)

As the fluoropolymer, a fluoropolymer excluding the polymer (I) is preferable.

The fluoropolymer preferably has an ion exchange rate (IXR) of higher than 53. The preferable fluoropolymer has either no ionic groups at all or a limited number of ionic groups resulting in an ion exchange rate of higher than about 100. The preferable ion exchange rate of the fluoropolymer is preferably 1,000 or more, more preferably 2,000 or more, and even more preferably 5,000 or more.

Examples of the fluoropolymer include a TFE polymer in which TFE is the monomer having the highest mole fraction (hereinafter, "the most abundant monomer") among the monomers in the polymer, a VDF polymer in which VDF is the most abundant monomer, and a CTFE polymer in which CTFE is the most abundant monomer.

The production method of the present disclosure can suitably produce, for example, (I) non melt-processible fluororesins, including tetrafluoroethylene polymers (TFE polymers (PTFE)); (II) melt-fabricable fluororesins, including ethylene/TFE copolymers (ETFE), TFE/HFP copolymers (FEP), TFE/perfluoro(alkyl vinyl ether) copolymers (e.g., PFA, MFA), TFE/perfluoroallyl ether copolymers, TFE/VDF copolymers, and electrolyte polymer precursors; and (III) fluoroelastomers, including TFE/propylene copolymers, TFE/propylene/third monomer copolymers (the third monomer may be VDF, HFP, CTFE, fluoroalkyl vinyl ether, or the like), TFE/fluoroalkyl vinyl ether copolymers; HFP/ethylene copolymers, HFP/ethylene/TFE copolymers; VDF/HFP copolymers; HFP/ethylene copolymers; VDF/TFE/HFP copolymers; and fluorine-containing segmented polymers disclosed in Japanese Patent Publication No. 61-49327.

The fluoropolymer is preferably a fluororesin, more preferably a fluororesin having a fluorine substitution percentage, calculated by the following formula, of 50% or higher, even more preferably a fluororesin having the fluorine substitution percentage of higher than 50%, yet more preferably a fluororesin having the fluorine substitution percentage of 55% or higher, yet more preferably a fluororesin having the fluorine substitution percentage of 60% or higher, yet more preferably a fluororesin having the fluorine substitution percentage of 75% or higher, particularly preferably a fluororesin having the fluorine substitution percentage of 80% or higher, and most preferably a fluororesin having the fluorine substitution percentage of 90 to 100%, i.e., a perfluororesin. 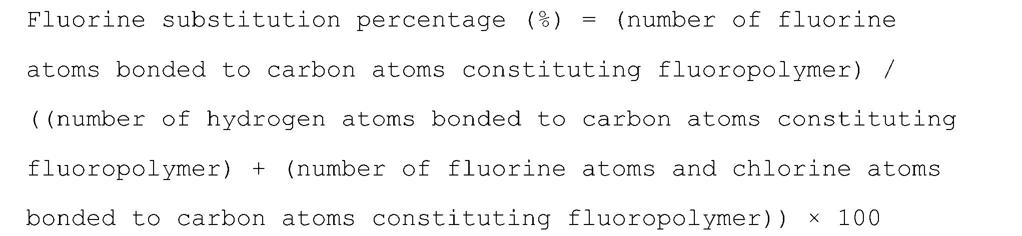 Fluorine substitution percentage (%) = (number of fluorine atoms bonded to carbon atoms constituting fluoropolymer) / ((number of hydrogen atoms bonded to carbon atoms constituting fluoropolymer) + (number of fluorine atoms and chlorine atoms bonded to carbon atoms constituting fluoropolymer)) × 100

The perfluororesin is more preferably a fluororesin having the fluorine substitution percentage of 95 to 100%, even more preferably PTFE, FEP, or PFA, and particularly preferably PTFE.

The fluoropolymer may have a core-shell structure. An example of the fluoropolymer having a core-shell structure is modified PTFE including a core of high-molecular-weight PTFE and a shell of a lower-molecular-weight PTFE or a modified PTFE in the particle. Examples of such modified PTFE include PTFE described in Japanese National Publication of International Patent Application No. 2005/527652.
(I) The non melt-processible fluororesins, (II) the melt-fabricable fluororesins, and (III) the fluoroelastomers suitably produced by the production method of the present disclosure are preferably produced in the following manner.
(I) Non melt-processible fluororesins

In the production method of the present disclosure, polymerization of TFE is usually performed at a polymerization temperature of 10 to 150°C and a polymerization pressure of 0.05 to 5 MPaG. For example, the polymerization temperature is more preferably 30°C or higher, and even more preferably 50°C or higher. Further, the polymerization temperature is more preferably 120°C or lower, and even more preferably 100°C or lower. Further, the polymerization pressure is more preferably 0.3 MPaG or higher, even more preferably 0.5 MPaG or higher, and more preferably 5.0 MPaG or lower, even more preferably 3.0 MPaG or lower. In particular, from the viewpoint of improving the yield of fluoropolymer, the polymerization pressure is preferably 1.0 MPaG or more, more preferably 1.2 MPaG or more, even more preferably 1.5 MPaG or more, and even more preferably 2.0 MPaG or more.

In an embodiment, the polymerization reaction is initiated by charging pure water into a pressure-resistant reaction vessel equipped with a stirrer, deoxidizing the system, charging TFE, increasing the temperature to a predetermined level, and adding a polymerization initiator. When the pressure decreases as the reaction progresses, additional TFE is fed continuously or intermittently to maintain the initial pressure. When the amount of TFE fed reaches a predetermined level, feeding is stopped, and then TFE in the reaction vessel is purged and the temperature is returned to room temperature, whereby the reaction is completed. Additional TFE may be added continuously or intermittently to prevent pressure drop.

In production of the PTFE, various known modifying monomers may be used in combination. PTFE as used herein is a concept that encompasses not only a TFE homopolymer but also a copolymer of TFE and a modifying monomer (hereinafter, referred to as a "modified PTFE").

The modifying monomer is not limited as long as it can be copolymerized with TFE, and examples thereof include fluoromonomers and non-fluoromonomers. Further, one or a plurality of kinds of the modifying monomers may be used.

Examples of the fluoromonomer include perfluoroolefins such as hexafluoropropylene (HFP); hydrogen-containing fluoroolefins such as trifluoroethylene and vinylidene fluoride (VDF); perhaloolefins such as chlorotrifluoroethylene; perfluorovinyl ethers; (perfluoroalkyl)ethylenes; and perfluoroallyl ethers.

Examples of the perfluorovinyl ether include, but are not limited to, a perfluoro unsaturated compound represented by the general formula (A):

CF₂=CF-ORf (A)

wherein Rf represents a perfluoroorganic group. The "perfluoroorganic group" as used herein means an organic group in which all hydrogen atoms bonded to the carbon atoms are replaced by fluorine atoms. The perfluoro organic group may have ether oxygen.

Examples of the perfluorovinyl ether include perfluoro(alkyl vinyl ether) (PAVE) in which Rf is a perfluoroalkyl group having 1 to 10 carbon atoms in the general formula (A). The perfluoroalkyl group preferably has 1 to 5 carbon atoms.

Examples of the perfluoroalkyl group in PAVE include a perfluoromethyl group, a perfluoroethyl group, a perfluoropropyl group, a perfluorobutyl group, a perfluoropentyl group, and a perfluorohexyl group.

Examples of the perfluorovinyl ether further include those represented by the general formula (A) in which Rf is a perfluoro(alkoxyalkyl) group having 4 to 9 carbon atoms; those in which Rf is a group represented by the following formula: 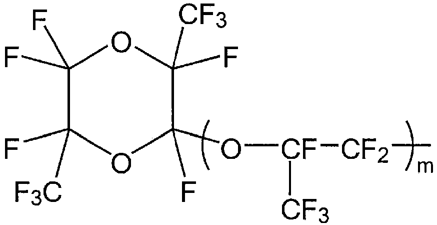 wherein m represents 0 or an integer of 1 to 4; and those in which Rf is a group represented by the following formula:

CF₃CF₂CF₂-(O-CF(CF₃)-CF₂)ₙ-

wherein n is an integer of 1 to 4.

Examples of hydrogen-containing fluoroolefins include CH₂=CF₂, CFH=CH₂, CFH=CF₂, CH₂=CFCF₃, CH₂=CHCF₃, CHF=CHCF₃ (E-form), and CHF=CHCF₃ (Z-form).

Examples of the (perfluoroalkyl)ethylene (PFAE) include, but are not limited to, (perfluorobutyl) ethylene (PFBE), and (perfluorohexyl) ethylene.

Examples of perfluoroallyl ether include fluoromonomers represented by the general formula:

CF₂=CF-CF₂-ORf

wherein Rf represents a perfluoro organic group.

Rf in the above general formula is the same as Rf in the general formula (A). Rf is preferably a perfluoroalkyl group having 1 to 10 carbon atoms or a perfluoroalkoxyalkyl group having 1 to 10 carbon atoms. Perfluoroallyl ether is preferably at least one selected from the group consisting of CF₂=CF-CF₂-O-CF₃, CF₂=CF-CF₂-O-C₂F₅, CF₂=CF-CF₂-O-C₃F₇, and CF₂=CF-CF₂-O-C₄F₉, more preferably at least one selected from the group consisting of CF₂=CF-CF₂-O-C₂F₅, CF₂=CF-CF₂-O-C₃F₇, and CF₂=CF-CF₂-O-C₄F₉, and even more preferably CF₂=CF-CF₂-O-CF₂CF₂CF₃.

From the viewpoint of reactivity with TFE, the modifying monomer preferably contains at least one selected from the group consisting of hexafluoropropylene, perfluoro(alkyl vinyl ether), and (perfluoroalkyl)ethylene.

The modifying monomer more preferably contains at least one selected from the group consisting of hexafluoropropylene, perfluoro(methyl vinyl ether), perfluoro(propyl vinyl ether), (perfluorobutyl)ethylene, (perfluorohexyl)ethylene, and (perfluorooctyl)ethylene.

In production of the TFE polymer, the polymer (I) can be used within the use range described for the production method of the present disclosure. The concentration of the polymer (I) is not limited as long as it is within the above range. Too large an amount of the polymer (I) added causes generation of needle-shaped particles having a large aspect ratio and gelling of the aqueous dispersion, impairing the stability. The lower limit of the amount of the polymer (I) used is preferably 0.0001% by mass, more preferably 0.001% by mass, even more preferably 0.01% by mass, and particularly preferably 0.02% by mass, based on the aqueous medium. The upper limit of the amount of the polymer (I) used is preferably 10% by mass and more preferably 5% by mass, based on the aqueous medium.

The polymer (I) may be added to the reaction vessel at once before initiation of the polymerization, may be added at once after initiation of the polymerization, may be added in multiple portions during the polymerization, or may be added continuously during the polymerization.

In production of the TFE polymer, the polymerization initiator used may be an organic peroxide such as a persulfate (e.g., ammonium persulfate), disuccinic acid peroxide, or diglutaric acid peroxide alone or in the form of a mixture thereof. An organic peroxide may be used together with a reducing agent such as sodium sulfite to form a redox system. Moreover, the concentration of radicals in the system can be also regulated by adding a radical scavenger such as hydroquinone or catechol or adding a peroxide decomposer such as ammonium sulfate during polymerization.

The redox polymerization initiator is preferably a redox initiator obtained by combining an oxidizing agent and a reducing agent. Examples of the oxidizing agent include persulfates, organic peroxides, potassium permanganate, manganese triacetate, and ammonium cerium nitrate. Examples of the reducing agent include sulfites, bisulfites, bromates, diimines, and oxalic acid. Examples of persulfate include ammonium persulfate and potassium persulfate. Examples of sulfites include sodium sulfite and ammonium sulfite. In order to increase the decomposition rate of the initiator, the combination of the redox initiator also preferably contains a copper salt or an iron salt. An example of the copper salt is copper(II) sulfate, and an example of the iron salt is iron(II) sulfate.

Examples of the redox initiator include potassium permanganate/oxalic acid, potassium permanganate/ammonium oxalate, ammonium persulfate/bisulfite/iron sulfate, manganese triacetate/oxalic acid, ammonium cerium nitrate/oxalic acid, and bromate/bisulfite, and potassium permanganate/oxalic acid is preferable. In the case of using a redox initiator, a polymerization tank may be charged with either an oxidizing agent or a reducing agent in advance, followed by continuously or intermittently adding the other to initiate the polymerization. For example, in the case of using potassium permanganate/oxalic acid, preferably a polymerization tank is charged with oxalic acid, and then potassium permanganate is continuously added thereto.

In the production of the TFE polymer, a known chain transfer agent may be used. Examples thereof include saturated hydrocarbons such as methane, ethane, propane, and butane, halogenated hydrocarbons such as chloromethane, dichloromethane, and difluoroethane, alcohols such as methanol, ethanol, and isopropanol, and hydrogen. The chain transfer agent is preferably one in a gas state at a normal temperature and normal pressure.

The amount of the chain transfer agent used is usually 1 to 10,000 mass ppm, preferably 1 to 5,000 mass ppm, based on the total amount of TFE fed.

In production of the TFE polymer, a saturated hydrocarbon that is substantially inert to the reaction, that is in a liquid state under the reaction conditions, and that has 12 or more carbon atoms may be used as a dispersion stabilizer for the reaction system in an amount of 2 to 10 parts by mass based on 100 parts by mass of the aqueous medium. Ammonium carbonate, ammonium phosphate, or the like may be added as a buffer to adjust the pH during the reaction.

When the polymerization for TFE is complete, a polymer dispersion having a solid concentration of 1.0 to 50% by mass and having an average primary particle size of 50 to 500 nm can be obtained.

The lower limit of the solid concentration is preferably 5% by mass and more preferably 8% by mass. The upper limit thereof may be, but is not limited to, 40% by mass or 35% by mass.

The lower limit of the average primary particle size is preferably 100 nm and more preferably 150 nm. The upper limit thereof is preferably 400 nm and more preferably 350 nm.

The average primary particle size can be measured by dynamic light scattering. The average primary particle size may be determined by preparing an aqueous dispersion with a solid concentration being adjusted to 1.0% by mass and using dynamic light scattering at 25°C with 70 measurement processes, wherein the solvent (water) has a refractive index of 1.3328 and the solvent (water) has a viscosity of 0.8878 mPa·s. The dynamic light scattering may use, for example, ELSZ-1000S (manufactured by Otsuka Electronics Co., Ltd.).

The aqueous dispersion of the TFE polymer is preferably mixed with a nonionic surfactant to stabilize and further concentrate the aqueous dispersion, and then further mixed with, depending on its purpose, an organic or inorganic filler to form a composition and used in a variety of applications. The composition, when applied to a metal or ceramic substrate, can provide a coating surface having non-stickiness, a low coefficient of friction, and excellent gloss, smoothness, abrasion resistance, weather resistance, and heat resistance, which is suitable for coating of rolls, cooking utensils, and the like, and impregnation processing of glass cloth, and the like.

The aqueous dispersion may also be used to prepare an organosol of the TFE polymer. The organosol may contain the TFE polymer and an organic solvent, and examples of the organic solvent include ether-based solvents, ketone-based solvents, alcohol-based solvents, amide-based solvents, ester-based solvents, aliphatic hydrocarbon-based solvents, aromatic hydrocarbon-based solvents, and halogenated hydrocarbon-based solvents. Suitably used are N-methyl-2-pyrrolidone and dimethylacetamide. The organosol may be prepared by the method disclosed in, for example, International Publication No. WO 2012/002038.

Examples of the melt-fabricable fluororesin include FEP, PFA, TFE/perfluoroallyl ether copolymers, ETFE, and ethylene/TFE/HFP copolymers (EFEP), and, in particular, PFA or FEP is preferable.

The aqueous dispersion also preferably contains a melt-processible fluororesin. Examples of the melt-fabricable fluororesin include FEP, PFA, TFE/perfluoroallyl ether copolymers, ETFE, and EFEP. The aqueous dispersion containing the melt-fabricable fluororesin can be used as a coating material. The melt-fabricable fluororesin enables sufficient fusion of the TFE polymer particles, thus improving the film-formability and providing the resulting film with gloss.

The aqueous dispersion of the TFE polymer is also preferably used as a dust suppression treatment agent. The dust suppression treatment agent can be used in a method for suppressing dust of a dust-generating substance by fibrillating a TFE polymer by mixing with a dust-generating substance and applying a compression-shearing action to the mixture at a temperature of 20 to 200°C, for example, methods disclosed in Japanese Patent No. 2827152 and Japanese Patent No. 2538783.

The aqueous dispersion of the TFE polymer can suitably be used for the dust suppression treatment agent composition disclosed in International Publication No. WO 2007/004250, and can also suitably be used for the method of dust suppression treatment disclosed in International Publication No. WO 2007/000812.

The dust suppression treatment agent is suitably used in dust suppression treatment in the fields of building-products, soil stabilizers, solidifying materials, fertilizers, landfill of incineration ash and harmful substance, explosion proof equipment, cosmetics, and sands for pet excretion represented by cat sand.

The aqueous dispersion of the TFE polymer is also preferably used as a material for producing TFE polymer fibers by a dispersion spinning method. The dispersion spinning method is a method in which the aqueous dispersion of the TFE polymer and an aqueous dispersion of a matrix polymer are mixed and the mixture is extruded to form an intermediate fiber structure, and then the intermediate fiber structure is fired to decompose the matrix polymer and sinter the TFE polymer particles, thereby providing TFE polymer fibers.

The fluoropolymer may be a low molecular weight PTFE.

A low-molecular-weight PTFE having a molecular weight of 600,000 or less (also referred to as PTFE micropowder) has excellent chemical stability and a very low surface energy, and is less likely to generate fibrils, and is therefore suitably used as an additive for improving the lubricity and the texture of the coating surface in production of plastics, inks, cosmetics, coating materials, greases, parts of office automation equipment, and toners (e.g., see Japanese Patent Laid-Open No. 10-147617).

Further, low molecular weight PTFE may be obtained by dispersing the polymerization initiator and the polymer (I) in an aqueous medium in the presence of a chain transfer agent, and polymerizing TFE or polymerizing TFE and a monomer that is copolymerizable with TFE. In this case, the chain transfer agent is preferably at least one selected from the group consisting of alkanes having 2 to 4 carbon atoms. Specifically, methane, ethane, propane, butane, and isobutane are more preferable, and ethane and propane are still more preferable. In this case, the amount of the chain transfer agent is preferably 10 mass ppm or more or more than 10 mass ppm based on the aqueous medium.

When using the low molecular weight PTFE obtained by polymerization as a powder, powder particles can be obtained by coagulating the aqueous dispersion.

The fluoropolymer may be a high-molecular-weight PTFE.

In the present disclosure, high molecular weight PTFE means non melt-processible and fibrillatable PTFE. On the other hand, low molecular weight PTFE means melt-fabricable and non-fibrillatable PTFE.

Being non-melt processible means a property that the melt flow rate cannot be measured at a temperature higher than the crystal melting point in accordance with ASTM D 1238 and D 2116.

The presence or absence of the fibrillation ability can be determined by "paste extrusion", a representative method of molding a "high-molecular-weight PTFE powder" which is a powder made from a polymer of TFE. Usually, high molecular weight PTFE can be paste-extruded when it is fibrillatable. When a non-sintered molded product obtained by paste extrusion shows substantially no strength or elongation (for example, when it shows an elongation of 0% and is broken when stretched), it can be regarded as non-fibrillatable.

High molecular weight PTFE preferably has a standard specific gravity (SSG) of 2.130 to 2.280. The standard specific gravity is determined by the water replacement method in accordance with ASTM D 792 using a sample molded in accordance with ASTM D 4895-89. The "high molecular weight" in the present disclosure means that the standard specific gravity is within the above range.

The low molecular weight PTFE has a melt viscosity of 1 × 10² to 7 × 10⁵ Pa·s at 380°C. The "low molecular weight" herein means that the melt viscosity is within the above range. The melt viscosity is a value measured while maintaining 2 g of a sample, which is heated for 5 minutes at 380°C in advance, at that temperature under a load of 0.7 MPa in accordance with ASTM D 1238 using a flow tester (manufactured by Shimadzu Corporation) and a 2φ-8L die.

High molecular weight PTFE has a melt viscosity significantly higher than that of low molecular weight PTFE, and it is difficult to accurately measure the melt viscosity thereof. On the other hand, the melt viscosity of low molecular weight PTFE is measurable, but it is difficult to obtain a formed article usable in the measurement of standard specific gravity from low molecular weight PTFE, and it is thus difficult to measure the accurate standard specific gravity thereof. Accordingly, in the present disclosure, the standard specific gravity is used as an index of the molecular weight of high molecular weight PTFE, while the melt viscosity is used as an index of the molecular weight of low molecular weight PTFE. It should be noted that there is no known measuring method for directly specifying the molecular weight of either high molecular weight PTFE or low molecular weight PTFE.

High molecular weight PTFE preferably has a peak temperature of 333 to 347°C, and more preferably 335 to 345°C. Low molecular weight PTFE preferably has a peak temperature of 322 to 333°C, and more preferably 324 to 332°C. The peak temperature can be specified as a temperature corresponding to the maximum value appearing in a differential thermal analysis (DTA) curve obtained by raising the temperature of PTFE, which has no history of being heated to a temperature of 300°C or higher, under a condition of 10°C/min using TG-DTA (thermogravimetric - differential thermal analyzer).

The peak temperature of PTFE may be 322 to 347°C.

When PTFE is high molecular weight PTFE, the upper limit of the peak temperature of PTFE may be 347°C or lower, 346°C or lower, 345°C or lower, 344°C or lower, 343°C or lower, 342°C or lower, 341°C or lower, or 340°C or lower.

The lower limit of the peak temperature of PTFE when PTFE is high molecular weight PTFE may be 333°C or higher, or 335°C or higher.

The upper limit of the peak temperature of PTFE when PTFE is low molecular weight PTFE may be 333°C or lower, or 332°C or lower.

The lower limit of the peak temperature of PTFE when PTFE is low molecular weight PTFE may be 322°C or higher, or 324°C or higher.

The average primary particle size of primary particles of low molecular weight PTFE is preferably 10 to 300 nm and more preferably 50 nm or more, even more preferably 100 nm or less, particularly preferably 150 nm or less, and yet more preferably 250 nm or less. The relatively small average primary particle size of primary particles can be obtained by, for example, adding a modifying monomer to the polymerization system at the initial stage of polymerization of TFE.

The average primary particle size of primary particles of the low-molecular-weight PTFE can be measured by dynamic light scattering. The average primary particle size may be determined by preparing an aqueous dispersion of low molecular weight PTFE with a polymer solid concentration being regulated to about 1.0% by mass and using dynamic light scattering at a measurement temperature of 25°C with the number of scans being 70, wherein the solvent (water) has a refractive index of 1.3328 and the solvent (water) has a viscosity of 0.8878 mPa·s. In dynamic light scattering, for example, ELSZ-1000S (manufactured by Otsuka Electronics Co., Ltd.) can be used.

Preferably, the high-molecular-weight PTFE has at least one endothermic peak in a range of 333 to 347°C on a heat-of-fusion curve with a temperature-increasing rate of 10°C/min using a differential scanning calorimeter (DSC) for a PTFE which has never been heated up to 300°C or higher, and has an enthalpy of fusion of 52 mJ/mg or higher at 290 to 350°C calculated from the heat-of-fusion curve. The enthalpy of fusion of PTFE is more preferably 55 mJ/mg or more, even more preferably 58 mJ/mg or more.

The fluoropolymer may be a TFE/HFP copolymer (FEP). FEP preferably has a monomer composition ratio (% by mass) of TFE:HFP = (60 to 95):(5 to 40), and more preferably (85 to 92):(8 to 15).

In addition to TFE and HFP, by polymerizing a further monomer that is copolymerizable with these monomers, a copolymer of TFE, HFP and a further monomer may be obtained as FEP. Examples of the further monomer include the above-described fluorine-containing monomers (excluding TFE and HFP) and fluorine-free monomers described above. One further monomer may be used singly, or multiple further monomers may be used in combination. The further monomer is preferably perfluoro(alkyl vinyl ether). The content of the further-monomer unit in FEP may be 0.1 to 2% by mass based on all monomer units.

In the polymerization of FEP, the polymer (I) can be used within the use range in the production method of the present disclosure, and is usually added in an amount of 0.0001 to 10% by mass based on 100% by mass of the aqueous medium.

The fluoropolymer may be a TFE/perfluoro (alkyl vinyl ether) copolymer (PFA). The TFE/perfluoro (alkyl vinyl ether) copolymer preferably has a monomer composition ratio (mol%) of TFE:perfluoro(alkyl vinyl ether) = (90 to 99.7):(0.3 to 10), and more preferably (97 to 99):(1 to 3). The perfluoro (alkyl vinyl ether) used is preferably represented by the formula: CF₂=CFORf⁴, wherein Rf⁴ is a perfluoroalkyl group having 1 to 6 carbon atoms.

In addition to TFE and perfluoro (alkyl vinyl ether), by polymerizing a further monomer that is copolymerizable with these monomers, a copolymer of TFE, perfluoro (alkyl vinyl ether), and the further monomer may be obtained as a TFE/perfluoro (alkyl vinyl ether) copolymer. Examples of the further monomer include the fluorine-containing monomers (excluding TFE and perfluoro (alkyl vinyl ether)) and fluorine-free monomers described above. One further monomer may be used singly, or multiple further monomers may be used in combination. The content of the further-monomer unit in the TFE/perfluoro (alkyl vinyl ether) copolymer may be 0.1 to 2% by mass based on all monomer units.

In the production method of the present disclosure, when the fluoropolymer is subjected to coagulation, washing, drying, or the like, discharge water or off gas is generated. The polymer (I), decomposition products and by-products by-produced from the polymer (I), residual monomers, and the like may be collected from discharge water generated in the coagulation or the washing and/or from off gas generated in the drying, and then purified to reuse the polymer (I), the decomposition products and by-products by-produced from the polymer (I), the residual monomers, and the like. Although the method for carrying out the above collection and purification is not limited, it may be carried out by a known method. For example, they may be performed by the methods disclosed in National Publication of International Patent Application No. 2011-520020. Examples thereof further include the methods disclosed in U.S. Patent Application Publication No. 2007/15937, U.S. Patent Application Publication No. 2007/25902, and U.S. Patent Application Publication No. 2007/27251. Specific examples of the methods are as follows.

An example of the method of collecting the polymer (I), the decomposition products and by-products of the polymer (I) by-produced from the polymer (I), the residual monomers, and the like from discharge water is a method in which the discharge water is brought into contact with adsorbent particles formed of ion exchange resin, activated carbon, silica gel, clay, zeolite, or the like, so that the particles are allowed to adsorb the polymer (I) and the others, and the discharge water and the adsorbent particles are then separated. Incinerating the adsorbent particles having adsorbed the polymer (I) and the like can prevent emission of the polymer (I) and the like into the environment.

Alternatively, the polymer (I) and the others may be removed and eluted by a known method from the ion exchange resin particles having adsorbed the polymer (I) and the others, and collected. For example, in the case of using anion exchange resin particles as the ion exchange resin particles, the polymer (I) and the others can be eluted by bringing a mineral acid into contact with an anion exchange resin. When a water-soluble organic solvent is added to the resulting eluate, the mixture is usually separated into two phases. Since the lower phase contains the polymer (I) and the others, it is possible to collect the polymer (I) and the others by collecting and neutralizing the lower phase. Examples of the water-soluble organic solvent include polar solvents such as alcohols, ketones, and ethers.

Other methods of collecting the polymer (I) and the others from ion exchange resin particles include a method of using an ammonium salt and a water-soluble organic solvent and a method of using an alcohol and, if necessary, an acid. In the latter method, ester derivatives of the polymer (I) and the others are generated, and thus, they can easily be separated from the alcohol by distillation.

When the discharge water contains fluoropolymer particles and other solids, they are preferably removed before the discharge water and the adsorbent particles are brought into contact with each other. Examples of methods of removing the fluoropolymer particles and other solids include a method of adding an aluminum salt, for example, to deposit these components, and then separating the discharge water and the deposits, and an electrocoagulation method. The components may also be removed by a mechanical method, and examples thereof include a crossflow filtration method, a depth filtration method, and a precoat filtration method.

From the viewpoint of productivity, the discharge water preferably contains the fluoropolymer in a non-agglomerated form in a low concentration, more preferably less than 0.4% by mass, and particularly preferably less than 0.3% by mass.

An example of the method of collecting the polymer (I) and the others from the off gas is a method in which a scrubber is brought into contact with deionized water, an alkaline aqueous solution, an organic solvent such as a glycol ether solvent, or the like to provide a scrubber solution containing the polymer (I) and the others. When the alkaline aqueous solution used is a highly concentrated alkaline aqueous solution, the scrubber solution can be collected in a state where the polymer (I) and the others are phase-separated, and thus the polymer (I) and the others can be easily collected and reused. Examples of the alkali compound include alkali metal hydroxides and quaternary ammonium salts.

The scrubber solution containing the polymer (I) and the others may be concentrated using a reverse osmosis membrane, for example. The concentrated scrubber solution usually contains fluoride ions. Still, the fluoride ions may be removed by adding alumina after the concentration so that the polymer (I) and the others can easily be reused. Alternatively, the scrubber solution may be brought into contact with adsorbent particles so that the adsorbent particles can adsorb the polymer (I) and the others, and thereby the polymer (I) and the others may be collected by the aforementioned method.

The polymer (I) and the others collected by any of the methods may be reused in the production of fluoropolymer.

While embodiments have been described above, it will be understood that various changes in form and detail can be made without departing from the gist and scope of the claims.
<1> The first aspect of the present disclosure provides
   a fluoropolymer aqueous dispersion comprising:
   a polymer (I) having a hydrophilic group;
   a fluoropolymer;
   a nonionic surfactant (a) having an HLB of more than 8; and
   an aqueous medium,
   wherein
   the dispersion is substantially free from a fluorine-containing surfactant,
   a content of the fluoropolymer is 40% by mass or more and 70% by mass or less based on the fluoropolymer aqueous dispersion,
   a content of the nonionic surfactant (a) is 4.0% by mass or more and 12% by mass or less based on the fluoropolymer, and
   a height of foam of the fluoropolymer aqueous dispersion generated by a foamability test is 140 mm or less.
<2> The second aspect of the present disclosure provides
   the fluoropolymer aqueous dispersion according to the first aspect, further comprising a nonionic surfactant (b) having an HLB of 8 or less.
<3> The third aspect of the present disclosure provides
   a fluoropolymer aqueous dispersion comprising:
   a polymer (I) having a hydrophilic group;
   a fluoropolymer;
   a nonionic surfactant (a) having an HLB of more than 8;
   a nonionic surfactant (b) having an HLB of 8 or less; and
   an aqueous medium,
   wherein
   the dispersion is substantially free from a fluorine-containing surfactant,
   a content of the fluoropolymer is 40% by mass or more and 70% by mass or less based on the fluoropolymer aqueous dispersion, and
   a content of the nonionic surfactant (a) is 4.0% by mass or more and 12% by mass or less based on the fluoropolymer.
<4> The fourth aspect of the present disclosure provides
   the fluoropolymer aqueous dispersion according to the second or third aspect, wherein a content of the nonionic surfactant (b) is 0.2% by mass or more and 10% by mass or less based on the fluoropolymer aqueous dispersion.
<5> The fifth aspect of the present disclosure provides
   the fluoropolymer aqueous dispersion according to any of the second to fourth aspects, wherein the nonionic surfactant (b) is at least one selected from the group consisting of an acetylenediol surfactant and an alkanediol surfactant.
<6> The sixth aspect of the present disclosure provides
   the fluoropolymer aqueous dispersion according to any of the second to fifth aspects, wherein a surface tension of a 0.1% aqueous solution of the nonionic surfactant (b) is 40 mN/m or less.
<7> The seventh aspect of the present disclosure provides
   the fluoropolymer aqueous dispersion according to any of the first to sixth aspects, wherein the nonionic surfactant (a) is at least one selected from the group consisting of a nonionic surfactant represented by the general formula (i) and a nonionic surfactant represented by the general formula (ii):

   R⁶-O-A¹-H (i)

   wherein R⁶ is a linear or branched primary or secondary alkyl group having 8 to 18 carbon atoms, and A¹ is a polyoxyalkylene chain; and

   R⁷-C₆H₄-O-A²-H (ii)

   wherein R⁷ is a linear or branched alkyl group having 4 to 12 carbon atoms, and A² is a polyoxyalkylene chain.
<8> The eighth aspect of the present disclosure provides
   the fluoropolymer aqueous dispersion according to any of the first to seventh aspects, wherein the hydrophilic group of the polymer (I) is an ionic group, and an ion exchange capacity of the polymer (I) is 0.80 meq/g or more.
<9> The ninth aspect of the present disclosure provides
   the fluoropolymer aqueous dispersion according to any of the first to eighth aspects, wherein an ion exchange rate of the polymer (I) is 53 or less.
<10> The tenth aspect of the present disclosure provides
   the fluoropolymer aqueous dispersion according to any of the first to ninth aspects, wherein the polymer (I) has water solubility.
<11> The eleventh aspect of the present disclosure provides
   the fluoropolymer aqueous dispersion according to any of the first to tenth aspects, wherein a number average molecular weight of the polymer (I) is 0.1 × 10⁴ or more.
<12> The twelfth aspect of the present disclosure provides
   the fluoropolymer aqueous dispersion according to any of the first to eleventh aspects, wherein the polymer (I) contains a polymerization unit (I) derived from a monomer (I) represented by the general formula (I):

   CX¹X³=CX²R(-CZ¹Z²-A⁰)ₘ (I)

   wherein X¹ and X³ are each independently F, Cl, H, or CF₃; X² is H, F, an alkyl group, or a fluorine-containing alkyl group; A⁰ is an anionic group; R is a linking group; Z¹ and Z² are each independently H, F, an alkyl group, or a fluorine-containing alkyl group; and m is an integer of 1 or more.
<13> The thirteenth aspect of the present disclosure provides
   the fluoropolymer aqueous dispersion according to any of the first to twelfth aspects, wherein the fluoropolymer is a perfluororesin.
<14> The fourteenth aspect of the present disclosure provides
   the fluoropolymer aqueous dispersion according to any of the first to thirteenth aspects, wherein the fluoropolymer is a polytetrafluoroethylene.
<15> The fifteenth aspect of the present disclosure provides
   the fluoropolymer aqueous dispersion according to any of the first to fourteenth aspects, wherein the fluoropolymer is a polytetrafluoroethylene having non melt-processibility.
<16> The sixteenth aspect of the present disclosure provides
   the fluoropolymer aqueous dispersion according to any of the first to fifteenth aspects, wherein
   the polymer (I) is a polymer containing a polymerization unit (1) derived from a monomer represented by the general formula (1) or a polymer containing a polymerization unit (2) derived from a monomer represented by the general formula (2), wherein a content of the polymerization unit (1) is 90 mol% or more based on all polymerization units, a content of the polymerization unit (2) is 90 mol% or more based on all polymerization units, and a content of the polymer (I) is 10.0 to 1,000 mass ppm based on the fluoropolymer aqueous dispersion,
   an HLB of the nonionic surfactant (a) is 10 or more, and a content of the nonionic surfactant (a) is 4.0% by mass or more and 8.0% by mass or less based on the fluoropolymer, and
   a content of the nonionic surfactant (b) is 0.5% by mass or more and 5.0% by mass or less based on the fluoropolymer aqueous dispersion:

      CX₂=CY(-CZ₂-O-Rf-A) (1)

      wherein X is the same or different and is -H or -F; Y is -H, - F, an alkyl group, or a fluorine-containing alkyl group; Z is the same or different and is -H, -F, an alkyl group, or a fluoroalkyl group; Rf is a fluorine-containing alkylene group having 1 to 40 carbon atoms or a fluorine-containing alkylene group having 2 to 100 carbon atoms and having an ether bond; and A is -COOM or -SO₃M, wherein M is H or NH₄; provided that at least one of X, Y, and Z contains a fluorine atom,

      CX₂=CY(-O-Rf-A) (2)

      wherein X is the same or different and is -H or F; Y is -H, - F, an alkyl group, or a fluorine-containing alkyl group; Rf is a fluorine-containing alkylene group having 1 to 40 carbon atoms or a fluorine-containing alkylene group having 2 to 100 carbon atoms and having an ether bond or a keto group; and A is -COOM or -SO₃M, wherein M is H or NH₄.

### EXAMPLES

Next, embodiments of the present disclosure will now be described by way of Examples, but the present disclosure is not limited only to the Examples.

Various numerical values in the Examples were measured by the following methods.

### <PTFE solid concentration (content) in aqueous dispersion>

The PTFE solid concentration (P% by mass) in an aqueous dispersion was calculated from the formula: P=[Z/X]×100 (% by mass) from the heating residue (Y g) obtained by heating about 1 g (X g) of a sample in an aluminum cup having a diameter of 5 cm at 110°C for 30 minutes and the heating residue (Z g) obtained by heating the obtained heating residue (Y g) at 300°C for 30 minutes.

### <Content of nonionic surfactant>

The content (N% by mass) of the nonionic surfactant (a) in the aqueous dispersion obtained in Production Example 1 based on PTFE was calculated from the expression: N = [(Y - Z)/Z] × 100 (% by mass) from the heating residue (Y g) obtained by heating about 1 g (X g) of a sample in an aluminum cup having a diameter of 5 cm at 110°C for 30 minutes and the heating residue (Z g) obtained by heating the obtained heating residue (Y g) at 300°C for 30 minutes.

The content of the nonionic surfactant (b) was calculated from the amount of the nonionic surfactant (b) used for preparation of the aqueous dispersion and the like.

### <Surface tension>

A 0.1% aqueous solution at 25°C was prepared, and the surface tension of the obtained aqueous solution was measured by the Wilhelmy method.

### <Height of foam>

The content of PTFE in the aqueous dispersion was adjusted to 55% by mass, a foamability test was performed by the Ross-Miles method in accordance with JIS K 3362, and the height of foam immediately after dropping the PTFE aqueous dispersion was measured.

The nonionic surfactants used in the Examples are as follows.
Nonionic surfactant (a) having an HLB of more than 8
Nonionic surfactant (a1): NOIGEN TDS-80 manufactured by DKS Co., Ltd. (HLB: 13)
Nonionic surfactant (a2): TERGITOL TMN6 manufactured by DOW (HLB: 13)
Nonionic surfactant (b) having an HLB of 8 or less
Nonionic surfactant (b1): Dynol 607 manufactured by EVONIK (surface tension of 0.1% aqueous solution: 27 mN/m, HLB: 8)
Nonionic surfactant (b2): Surfynol 104E manufactured by EVONIK (surface tension of 0.1% aqueous solution: 33 mN/m, HLB: 4)
Nonionic surfactant (b3): Surfynol AD01 manufactured by EVONIK (surface tension of 0.1% aqueous solution: 36 mN/m, HLB: 3)

### Production Example 1

According to the method described in Example 4 of International Publication No. WO 2021/045227, a PTFE aqueous dispersion 1 was obtained. The obtained PTFE aqueous dispersion 1 had a solid concentration of 60.3% by mass and a nonionic surfactant (a1) content of 5.5% by mass based on PTFE. For other configurations such as the content of the polymer (I) having a hydrophilic group (the concentration of polymer D) and the content of the fluorine-containing surfactant, the PTFE aqueous dispersion 1 also had the same configurations as those of the PTFE aqueous dispersion 4-1 described in Example 4 of International Publication No. WO 2021/045227.

### Examples 1 to 4

Deionized water and the nonionic surfactant described in Table 1 were added to the PTFE aqueous dispersion 1, and the foamability test was performed. The results are shown in Table 1. The content of the nonionic surfactant described in Table 1 is the content of the nonionic surfactant additionally added to the PTFE aqueous dispersion 1 and does not include the content of the nonionic surfactant (a1).

### Comparative Example 1

Deionized water was added to the PTFE aqueous dispersion 1, and the foamability test was performed. The results are shown in Table 1.

### Comparative Example 2

Deionized water and the nonionic surfactant (a2) were added to the PTFE aqueous dispersion 1, and the foamability test was performed. The results are shown in Table 1.

**Table 1**

| Item | Unit | Example 1 | Example 2 | Example 3 | Example 4 | Comparative Example 1 | Comparative Example 2 |
|---|---|---|---|---|---|---|---|
| Type of surfactant | - | (b1) | (b1) | (b2) | (b3) | - | (a2) |
| Content of surfactant | % based on aqueous dispersion | 1.0 | 0.75 | 0.50 | 3.0 | - | 1.0 |
| Foamability test (height of foam) | mm | 56 | 117 | 113 | 34 | 160 | 167 |

## Claims

1. A fluoropolymer aqueous dispersion comprising:
a polymer (I) having a hydrophilic group;
a fluoropolymer;
a nonionic surfactant (a) having an HLB of more than 8; and
an aqueous medium,
wherein
the dispersion is substantially free from a fluorine-containing surfactant,
a content of the fluoropolymer is 40% by mass or more and 70% by mass or less based on the fluoropolymer aqueous dispersion,
a content of the nonionic surfactant (a) is 4.0% by mass or more and 12% by mass or less based on the fluoropolymer, and
a height of foam of the fluoropolymer aqueous dispersion generated by a foamability test is 140 mm or less.

2. The fluoropolymer aqueous dispersion according to claim 1, further comprising a nonionic surfactant (b) having an HLB of 8 or less.

3. A fluoropolymer aqueous dispersion comprising:
a polymer (I) having a hydrophilic group;
a fluoropolymer;
a nonionic surfactant (a) having an HLB of more than 8;
a nonionic surfactant (b) having an HLB of 8 or less; and
an aqueous medium,
wherein
the dispersion is substantially free from a fluorine-containing surfactant,
a content of the fluoropolymer is 40% by mass or more and 70% by mass or less based on the fluoropolymer aqueous dispersion, and
a content of the nonionic surfactant (a) is 4.0% by mass or more and 12% by mass or less based on the fluoropolymer.

4. The fluoropolymer aqueous dispersion according to claim 2 or 3, wherein a content of the nonionic surfactant (b) is 0.2% by mass or more and 10% by mass or less based on the fluoropolymer aqueous dispersion.

5. The fluoropolymer aqueous dispersion according to any one of claims 2 to 4, wherein the nonionic surfactant (b) is at least one selected from the group consisting of an acetylenediol surfactant and an alkanediol surfactant.

6. The fluoropolymer aqueous dispersion according to any one of claims 2 to 5, wherein a surface tension of a 0.1% aqueous solution of the nonionic surfactant (b) is 40 mN/m or less.

7. The fluoropolymer aqueous dispersion according to any one of claims 1 to 6, wherein the nonionic surfactant (a) is at least one selected from the group consisting of a nonionic surfactant represented by the general formula (i) and a nonionic surfactant represented by the general formula (ii):
R⁶-O-A¹-H (i)
wherein R⁶ is a linear or branched primary or secondary alkyl group having 8 to 18 carbon atoms, and A¹ is a polyoxyalkylene chain; and
R⁷-C₆H₄-O-A²-H (ii)
wherein R⁷ is a linear or branched alkyl group having 4 to 12 carbon atoms, and A² is a polyoxyalkylene chain.

8. The fluoropolymer aqueous dispersion according to any one of claims 1 to 7, wherein the hydrophilic group of the polymer (I) is an ionic group, and an ion exchange capacity of the polymer (I) is 0.80 meq/g or more.

9. The fluoropolymer aqueous dispersion according to any one of claims 1 to 8, wherein an ion exchange rate of the polymer (I) is 53 or less.

10. The fluoropolymer aqueous dispersion according to any one of claims 1 to 9, wherein the polymer (I) has water solubility.

11. The fluoropolymer aqueous dispersion according to any one of claims 1 to 10, wherein a number average molecular weight of the polymer (I) is 0.1 × 10⁴ or more.

12. The fluoropolymer aqueous dispersion according to any one of claims 1 to 11, wherein the polymer (I) contains a polymerization unit (I) derived from a monomer (I) represented by the general formula (I):
CX¹X³=CX²R(-CZ¹Z²-A⁰)ₘ (I)
wherein X¹ and X³ are each independently F, Cl, H, or CF₃; X² is H, F, an alkyl group, or a fluorine-containing alkyl group; A⁰ is an anionic group; R is a linking group; Z¹ and Z² are each independently H, F, an alkyl group, or a fluorine-containing alkyl group; and m is an integer of 1 or more.

13. The fluoropolymer aqueous dispersion according to any one of claims 1 to 12, wherein the fluoropolymer is a perfluororesin.

14. The fluoropolymer aqueous dispersion according to any one of claims 1 to 13, wherein the fluoropolymer is a polytetrafluoroethylene.

15. The fluoropolymer aqueous dispersion according to any one of claims 1 to 14, wherein the fluoropolymer is a polytetrafluoroethylene having non melt-processibility.

16. The fluoropolymer aqueous dispersion according to any one of claims 1 to 15, wherein
the polymer (I) is a polymer containing a polymerization unit (1) derived from a monomer represented by the general formula (1) or a polymer containing a polymerization unit (2) derived from a monomer represented by the general formula (2), wherein a content of the polymerization unit (1) is 90 mol% or more based on all polymerization units, a content of the polymerization unit (2) is 90 mol% or more based on all polymerization units, and a content of the polymer (I) is 10.0 to 1,000 mass ppm based on the fluoropolymer aqueous dispersion,
an HLB of the nonionic surfactant (a) is 10 or more, and a content of the nonionic surfactant (a) is 4.0% by mass or more and 8.0% by mass or less based on the fluoropolymer, and
a content of the nonionic surfactant (b) is 0.5% by mass or more and 5.0% by mass or less based on the fluoropolymer aqueous dispersion:
CX₂=CY(-CZ₂-O-Rf-A) (1)
wherein X is the same or different and is -H or -F; Y is -H, - F, an alkyl group, or a fluorine-containing alkyl group; Z is the same or different and is -H, -F, an alkyl group, or a fluoroalkyl group; Rf is a fluorine-containing alkylene group having 1 to 40 carbon atoms or a fluorine-containing alkylene group having 2 to 100 carbon atoms and having an ether bond; and A is -COOM or -SO₃M, wherein M is H or NH₄, provided that at least one of X, Y, and Z contains a fluorine atom,
CX₂=CY(-O-Rf-A) (2)
wherein X is the same or different and is -H or F; Y is -H, - F, an alkyl group, or a fluorine-containing alkyl group; Rf is a fluorine-containing alkylene group having 1 to 40 carbon atoms or a fluorine-containing alkylene group having 2 to 100 carbon atoms and having an ether bond or a keto group; and A is -COOM or -SO₃M, wherein M is H or NH₄.
